Europäisches Patentamt

European Patent Office

Office européen des brevets

(11) Publication number: **0 353 909**
**A2**

# (12) EUROPEAN PATENT APPLICATION

(21) Application number: 89307347.8

(51) Int. Cl.⁴: **H04N 1/46 , G06F 3/12**

(22) Date of filing: 20.07.89

(30) Priority: 02.08.88 US 227279

(43) Date of publication of application:
07.02.90 Bulletin 90/06

(84) Designated Contracting States:
**DE FR GB NL**

(71) Applicant: TEKTRONIX, INC.
Howard Vollum Park 14150 S.W. Karl Braun
Drive P.O. Box 500
Beaverton Oregon 97077(US)

(72) Inventor: Wimmer, Guenther W.
8840 N.W. Cornell Road
Portland Oregon 97229(US)

(74) Representative: Burke, Steven David et al
R.G.C. Jenkins & Co. 26 Caxton Street
London SW1H 0RJ(GB)

(54) **System and method for controlling printing in a multi-terminal single-printer environment.**

(57) A system and method is disclosed for controlling the printing of images displayed on multiple computer display terminals onto a single remote printer. The system, which can be described as a distributive video acquisition/control system, includes individual data conversion modules (video adaptors) proximately coupled to individual display terminals, a data re-conversion/multiplexer module located within or proximately coupled to the printer, and a fiber optic cable for serially linking the conversion and re-conversion modules. Each data conversion module includes an A/D (analog to digital) converter which converts parallel RGB (red, green, blue) analog video data (received from a terminal) to parallel RGB digital data, and an encoder which converts the parallel RGB digital data to coded serial digital data light pulses) for transmission over the fiber optic cable to the data reconversion module. Upon receipt of the serial data from the multiple conversion modules, the data reconversion module multiplexes and converts the serial data to parallel digital form, and stores the data in a frame buffer of the printer. The video acquisition/control system also includes a user interface or print control unit (module) which enables a user to easily calibrate the system and to enter print control information and receive, at his worksite, information about the status of the remote printer.

FIG. 2

# SYSTEM AND METHOD FOR CONTROLLING PRINTING IN A MULTI-TERMINAL SINGLE-PRINTER ENVIRON-MENT

## Background of the Invention

This invention relates generally to image transfer systems and, more particularly, to color video processors/controllers for linking multiple display terminals to individual remote printers.

Many color video processors/controllers are available for controlling the transfer of analog video RGB (red, green, blue) data from multiple display terminals to a remote printer. The video controllers permit images displayed on the CRT (cathode ray tube) screens of the display terminals to be reproduced onto a print medium such as paper or transparency. Some of these prior art video controllers are currently available from CalComp Corporation, Seiko Corporation, Tektronix Corporation, and Versatec Corporation.

One problem with many of the prior art systems is that they do not provide a convenient way for a user to specify and receive printer environmental information (i.e., specify printer control information and receive printer status information) at the user's worksite. Another problem in many prior art systems is cable attenuation, and associated video signal degradation and differential propagation velocities of the video signals, due to lengthy multi-cable coaxial coupling of the display terminal and printer. Still another problem of many prior art systems is the numerous, burdensome entries or responses-to-prompts the systems often require from the user. A further problem with many prior art systems is that replacement of the video controller often requires replacement of the printer and/or display system.

What would be useful and very beneficial, therefore, is a video control system which would eliminate or substantially reduce the above-mentioned problems.

## Summary of the Invention

In accordance with the illustrated preferred embodiment of the present invention, a distributive video acquisition/control system is disclosed having a data conversion module (video adapter) located proximate to the display terminal, a data re-conversion module (multiplexer/encoder decoder) located within or proximate to the printer, and a fiber optic cable (or optionally, but less preferred, a coaxial, infrared or other link) for serially linking the conversion and reconversion modules. The video control system includes a user interface or print control module which enables a user to enter print control information and receive printer status information at his worksite.

The video adapter or data conversion module includes an A/D (analog to digital) converter which converts parallel RGB (red, green, blue) analog video data to parallel RGB digital data, and includes an encoder which converts the parallel RGB digital data to coded serial digital data (light pulses) for transmission over the fiber optic cable to the data reconversion module.

The data reconversion module receives serial digital data from multiple conversion modules coupled to multiple display terminals. The data reconversion module includes a multiplexer/encoder-decoder which multiplexes the received data and converts the serial digital data from serial light pulses to parallel digital (electrical) data, then stores the data in the frame buffer of the printer.

According to the preferred embodiment, therefore, the invention provides a tool by which video images displayed on a terminal/workstation may be captured, stored, and subsequently printed on a permanent (hard copy) medium. The invention differs in one important respect from prior art systems in that the video signal (image data) acquisition/conversion and user interface functions are performed at the point of use (i.e., at the user's worksite), whereas, because image storage and printing facilities are made available as a shared resource to a multiplicity of user's, the image reconversion and storage functions are performed at or proximate to the printer at a location remote from the user's worksite.

## Brief Description of the Drawings

Fig. 1 is an illustration of the system environment of the present invention;
Fig. 2 is a block diagram of the system of the present invention,

Fig. 3 is a block diagram of the system of Fig. 2 in greater detail;

Fig. 4 is a block diagram showing a video adapter module of the system of the present invention in greater detail;

Fig. 5 is a block diagram showing an alternative representation of the system of Figs. 2 and 3;

Fig. 6 is a block diagram showing selected elements of the system of Fig. 3, 4, 5;

Fig. 7 is an illustration of a print control unit included in the system of Fig. 2;

Fig. 8 is a block diagram showing an alternative arrangement and use of the print control unit in the system of Fig. 2;

Fig. 9 is a block diagram showing a fiber optic communications link included in the system of Fig. 2; and

Fig. 10 is an illustration of a displayed image useful in calibrating the system of the present invention shown in Fig. 2.

## Description of the Preferred Embodiment

Referring now to Fig. 1, there is shown a computer display terminal/printer system 11 including a distributive video acquisition/control system of the present invention. The display/printer system 11 includes multiple CRT (cathode ray tube) display units 13, 15, 17, 19 coupled to a printer 21 via the video acquisition/control system.

As shown in Figs. 1 and 2, the video acquisition/control system 23 may comprise one or more user interfaces or print control units 25, 27, 29, 31, one or more video adapters or video acquisition modules 33, 35, 37, 39, and one or more duplex fiber optic cables (links) 41, 43, 45, 47. The system 23 also comprises a multiplexer 49 (Fig. 2), which may be housed within printer 21 (Fig. 1). Fig. 3 shows system 23 in greater detail.

The RGB analog video signals from the display is sampled/digitized (acquired and quantitized) by samplers (e.g., 51) coupled to each red, green, and blue channel or by a single sampler receiving red, green, and blue video through a multiplexer. The sampler 51 (Fig. 3) incorporates a DC Restoration circuit. Composite sync information on the green video channel is extracted by a peak detecting sync separator circuit 53. Synchronous sampling of the video information is employed using a gated clock derived from a PLL (phase lock loop) 63 frequency synthesizer referenced to the display's Horizontal Sync. Quantitization of the image is performed over the span of many (e.g., 128) video frames. Pixels are sampled on each viewable video line (on a column relationship) offset from the beginning of each horizontal line within a frame. Image acquisition in this manner may be accomplished in under five seconds.

Fig. 4 shows a video adapter module 33 of the system in greater detail. Fig. 5 is an alternative representation of the system of Figures 2 and 3. The quantitization of analog video to bi-level digital video is performed by an A-D flash converter 59 (Fig. 4) using DC restoration as a reference. A first-in-first-out memory 61 accepts digitized data output from the flash converter 59 for entry into a data encoder (Manchester data encoder) 57 of a serial link adaptor.

As shown in Figs. 3 and 4, the phase locked loop for sampling clock generation is configured as a basic phase locked frequency synthesizer 63. Host terminal) display signal Hsync is applied to the loop as it's reference. Phase coherence of the synthesized sampling clock is adjusted through an auto calibration procedure performed when the interface is installed. The alignment of sampling phase is controlled through injection of an offset current. Calibration constants and user specified display attributes are retained in non-volatile memory for recall at time of power up.

The Sync Separator (sync stripper) 53 operates to extract Hsync and Vsync signal information from the green composite video channel. The sync separator 53 is implemented to respond ratiometerically to the level of the sync tip, reducing phase drift sensitivities due to amplitude variations of the video signal and inaccuracies of the DC Restore circuits 51.

The DAC 59 generates an offset current to the PLL 63 proportionate to the calibration constant recorded during installation of the interface. The phase offset current aligns the sample clock optimally within a pixel cell and as a result normalizes clock skews, propagation delays, etc. common to all primaries.

As shown in Fig. 3, the serial link adapter includes the encoder 57, FIFO memory 61, a fiber-optic duplex cable interface 62 and cable 41 connecting the multiplexer 49 to sampler 51 (digitizer 55) of the video adapter/acquisition module 33. Interface 62 is shown in greater detail in Fig. 6. Sampled pixel data is transferred over this cable (link) using a publicly available Manchester coded data format.

In addition to transmitting pixel data, the serial link adapter 60 is used to transmit copy requests and system status messages. This is done through operation of a print control unit, e.g., print control unit 25

3

coupled to video adapter/acquisition module 33 (Fig. 1).

The Manchester data encoder 57 of serial link adapter 60 takes the sampled (digital) RGB data and Sync information provided by the video sampler 51 and sync separator 53, and formats them for transmission over the serial fiber optic communications link 41. As shown in Figs. 3 and 4, the serial link adapter 60 also provides an interface to the link for the processor kernel 65, for use in transmitting print control unit information and terminal type information to the multiplexer 49 and receiving acknowledgment information from the multiplexer 49.

Data is provided to the serial link adapter 60 in the form parallel pixel data, plus vertical and horizontal sync information. The Manchester encoder 50 of the serial link adapter formats NRZ data from its shift register (not shown) and transmits the data over the fiber optic serial link 41 (or 43, 45, 47) to the multiplexer 49.

A power supply 64 provides regulated power (e.g., +5 volt and - 5.2 volt power) to run the circuitry in the video adapter/acquisition module 33. This power is derived using an external transformer 48 together with an internal rectifier, filter and linear regulator system (not shown).

A processor 65 provides overall control for the circuitry in the video adaptor 33. The processor kernel 65 also provides a selected quantity of non-volatile memory for storing the calibration values for the video sampler 51.

Cables from each of the video adaptors 33, 35, 37, 39 connect to multiplexer 49. The multiplexer continuously scans each of the fiber optic serial data links (e.g., 60, 41). Actual image data transfer and system control between the multiplexer 49 and each of the remote video adapters is accomplished in this manner.

The multiplexer 49 consists of fiber optic line drivers and receivers for each port. Each pair of drivers/receivers are individually connected to a Manchester encoder/decoder during multiplexor scanning operation. This allows received image data and control information from each individual video adapter to be decoded for use by the associated frame buffer memory/printer. The Manchester encoder in turn, receives system and printer status information which is sent through the drivers back to the associated video adapter. There (at the adapter) it is processed to provide control of the system and/or displayed at the users print control unit (e.g., 25).

As shown in Fig. 1, a print control unit (e.g., unit 25) is coupled to each display (e.g., display 13) at the user's worksite, and provides a communication link between the user and the printer. As shown in Fig. 7, each print control unit comprises a two-line sixteen characters per line) liquid crystal display (LCD) 101 and a set of keys 103, 105, 107 for selecting and entering information into the system. The print control unit is used to inform the user of system errors and fault conditions, and to control printer activity such as printing, displaying messages, and selecting printing and imaging parameters (e.g., parameters such as number of prints, image size, or color from a color palette). Menu information or print command is displayed on a first line (line 1) of the LCD of the printer control unit. On a second line (line 2) various options are displayed that are selectable from the menu/command displayed on line 1. The current option is shown to blink if more than one option is available to (selectable by) the user. If a displayed item of a menu or command (and option) is not desired by the user, he may scroll to and display the next menu item or command by depressing the NEXT key 103. If he depresses the OPTION key 105, the next option that is associated with the currently displayed command is selected.

As indicated above, the top line of the LCD 101 is used for command prompts questions. (Command prompt questions are contained in menu structures based in the operating code of the frame buffer and video acquisition module). All command prompts end in a question mark. Options to commands occupy the second line of the LCD, with the currently selected option blinking at a predetermined rate. Pressing the GO button executes the command with the current option. Pressing the NEXT button moves to the next command in the menu. The OPTION button selects the next option to the current command.

Status displays on the print control unit appear on both lines. Sample status messages are presented in Table 4.

As shown in Fig. 8, in addition to being coupled to a video adapter module (e.g., module 33), the print control unit may be coupled directly to the frame buffer/print engine of the printer (e.g., frame buffer 34), permitting the user to establish default values or alter default values associated with the copying function.

Fig. 9 shows a print control unit in greater detail. The print control unit converts serial data stream from a video adapter into parallel format used by LCD 101, and converts parallel data from the LCD and switches it into a serial stream for the video adapter.

As shown in Fig. 9, the incoming serial data stream is inverted and collected in an eight-bit shift register 109. The start bit is used to signify the state of the bit stream. When the start bit reaches the seventh position of the shift register (one bit, the unused bit, remaining to be sent), the data nibble is inverted and fed into the LDC's controller. When the last bit is received, the start bit is used to clear the shift register 109. The input to the shift register is disabled when the data enable line of the interface is low.

After each nibble is received from the video adapter, the LCD data bus 111 and the switch state is sampled for transmission to the video adapter. This data is held in a serial shift register 113, and clocked out to the video adapter by the video adapter clock signal. Switch state bits are asserted low when the switch is depressed.

Table 1 shows the various commands and options that may be entered into the system using a print control unit.

TABLE 1

PRINT CONTROL UNIT MENUS OF COMMANDS AND OPTIONS

| LEVEL 1 (MAIN) MENU | LEVEL 2 MENU | LEVEL 3 MENU | LEVEL 4 MENU |
|---|---|---|---|
| Make Print? 1 Print | | | |
| Cancel Print? Last All | | | |
| Features Menu? Yes   No | | | |
| | Blk/Wht Invert? Yes  No | | |
| | Image Size? Std   Max | | |
| | Print Mode? Color Mono | | |
| | Color Palette? 8   4096 | | |
| | Date/Time Stamp? Yes  No | | |
| | Factory Default? Yes   No | | |
| | Go to Main Menu? Yes   No | | |
| Function Menu? Yes   No | | | |
| | Reserve Printer? Yes   Cancel | | |
| | Confidence Test? Yes  No | | |
| | Install Menu? Yes  No | | |

6

TABLE 1 (continued)

PRINT CONTROL UNIT MENUS OF COMMANDS AND OPTIONS

| LEVEL 1 (MAIN) MENU | LEVEL 2 MENU | LEVEL 3 MENU | LEVEL 4 MENU |
|---|---|---|---|
| | | Select Size?<br>1280 Pixel/Line<br><br>Enter Size?<br>0000 Pixel/Line<br><br>Go to Main Menu?<br>Yes No | |
| | % Color Level?<br>Red = 50<br><br>% Color Level?<br>Green = 50<br><br>% Color Level?<br>Blue = 50<br><br>Go To Main Menu<br>Yes No | | |
| Service Menu?<br>Yes No | | | |
| | Select Test?<br>Test # = All<br><br>Loop on Test?<br>Yes No<br><br>Run Tests?<br>Yes Exit Report | | |

For example, with the following command (Make Print) and option (Print 1) displayed at his print control unit:

MAKE PRINT?

PRINT 1 the user merely depresses the option key 105 (Fig. 7) to specify the number of copies desired. The user depresses the key until the desired number of copies is displayed (instead of the initial number 1). When the desired number is displayed, the user merely presses the GO key 107 to initiate a print request (the process of making a print of the image on the screen of the display terminal coupled to the print control unit). While the print request is waiting, the following message is displayed at the print control unit:

WAIT

PRINT PENDING

If, while the print request is waiting, the user wishes to cancel his request, he merely presses the NEXT key 103 to have the following menu item (command/option) displayed:

CANCEL PRINT

LAST ALL He then selects the "last" or "all" option, then presses the GO key 107 to have the last print request or all print requests cancelled. In which event, the "cancelling last" or "cancelling all" message would be displayed at the print control unit. In similar fashion, the NEXT, OPTION, and GO keys 103, 105, 107 of the print control unit (Fig. 7) may be used to specify or select one or more of the other menu items (commands/options) shown in Table 1. Tables 2 and 3 lists a further explanation of certain of the commands/options of the features and functions menus, and Table 4 lists various status messages that are displayed at the LCD 101 (Fig. 7) of the print control unit.

Tables 2-4 lists various menus and messages displayed by the print control unit when it is in user mode, i.e., when it is coupled to a video adapter (Fig. 8). Tables 5 and 6 lists various menus and messages that are displayed by the print control unit when it is in system mode, i.e., when it is coupled directly to the frame buffer of the printer.

In system mode, the printer control unit enables the user to set system parameters, or to perform service tests. When in system mode, the user can access the following menus:

Function Menu - which permits access to commands that control the printer functions during Reserve Printer and Confidence Test.

Setup Menu - which permits access to commands that set system level parameters. There are two submenus under the Setup Menu:

- Limits Menu - which permits access to commands that set system limits for the number of prints, or allow reservations.

- Defaults Menu - which permits access to commands used to set system-level values for black/white invert, image size, color palette, color level, date/time stamp printing and media type.

Date/Time Menu - which permits access to the command that sets the printer's clock, which is printed in date/time stamping.

Factory Default commands are used for returning many of the parameters to their factor setting. For example, a printer may be initialized with the following default parameter settings.

Make Print -- 1 Print Limit -- 99 Cancel Print -- Last Black/White Invert -- No Image Size -- Max Print Mode -- Color Color Palette -- 4096 Time/Date Stamp -- No Reserve Printer -- Printer is unreserved Allow Reserve -- Yes Reservation Time Limit -- 10 Minutes Select Pixel Size -- 1280 % Color Level Red -- 31%

% Color Level Green -- 31%

% Color Level Blue -- 31%

TABLE 2

FEATURES MENU

| Blk/Wht Invert?<br>Yes   No | The **Yes** option exchanges white with black.  The blacks on the screen image are printed as white; the whites are printed as black.  All other colors remain the same.  The **No** option prints images as they appear on the screen, with no black/white inversion. |
|---|---|

| Image Size?<br>Std    Max | Selects how the image is enlarged for printing. **Std** increases the size of the printed picture using replication, recommended for line drawings and text.  **Max** increases the size of the printed picture using interpolation, recommended for panel fills and shaded images. |
|---|---|

| Print Mode?<br>Color Mono | Controls whether the color screen image is printed in color or monochrome.  **Color** prints image in color.  **Mono** prints color screen image in 16 shades of grey. |
|---|---|

| Color Palette?<br>8 4096 | Follows the Print Mode Color option.  **8** prints images using 8 colors (cyan, magenta, yellow, red, green, blue, black and white), recommended for line drawings and text.  The 8  Color Level command under the Function Menu affects how colors are selected for printing using 8 colors. (Refer to Table 3 for a brief description of the 8 Color Level command.  **4096** prints images with 4096 shades of color using dithering. Recommended for panel fill and shaded images.) |
|---|---|

| Date/Time Stamp?<br>Yes   No | The **Yes** option places a small notation in the upper-left corner of the printed image indicating port number, date, and time of printing. |
|---|---|

| Factory Default?<br>Yes    No | The **Yes** option returns parameter settings to their factory default values. |
|---|---|

**TABLE 3**
**FUNCTION MENU - 8 COLOR LEVEL COMMAND**

| Go to Main Menu?<br>Yes    No | The Yes option causes the print control unit to scroll to the beginning of the main menu (to the Make Print command).  The No option causes the next command on the same level (Blk/Wht Invert) to be displayed. |
|---|---|

| 8 Color Level?<br>31% Red | This command may be used after selecting the Color Palette 8 Color option in the Features Menu.  The percentage determines how intense the reds on the screen image must be before they are printed on paper at full intensity.  For example, if the user sets 8 Color Level Red to 50% any reds on the screen the have an intensity less than 50% or more will print on paper.  Any reds with an intensity less than 50% will not print.  (If black/white inversion is on, they print as black.)  All reds are printed at full intensity, regardless of what intensity they are on the screen.  If 8 Color Level Red is set to 69% and a red on the screen has a 50% intensity, the red does not print because the screen intensity is less than the 8 Color Level setting. |
|---|---|

| 8 Color Level?<br>31% Green | The command may be used after selecting the Color Palette 8 Color option in the FeatureMenu. Menu.  The percentage determines how intense the greens on the screen image must be before they are printed on paper at full intensity. |
|---|---|

| 8 Color Level?<br>31 % Blue | This command may be used after selecting the Color Palette 8 Color option in the Features Menu.  The percentage determines how intense the blues on the screen image must be before they are printed on paper at full intensity. |
|---|---|

## TABLE 4
### Status, Error, and Calibration Messages

| | |
|---|---|
| WAIT<br>PRINT PENDING | This message appears after the request to print is made, during the time the request is waiting to be transmitted to the printer, and while it is being transmitted. |

| | |
|---|---|
| CANCELING<br>ALL | This message appears when all print requests are cancelled using the All option on the Cancel Print command. The printer finishes printing any print is have already started, but cancels any additional prints requested. |

| | |
|---|---|
| CANCELING<br>LAST | This message appears when the last print request is cancelled using the Last option on the Cancel Print command. The printer finishes printing any print is has already started, but will cancel any other prints requested. |

| | |
|---|---|
| RESERVE<br>PENDING | This message appears when a Reserve Printer request is sent to the printer, but other users have print requests in front of the user's reservation. |

| | |
|---|---|
| RESERVE<br>ACTIVE | This message appears when the printer receives the request to reserve the printer. This message may also follow the Reserve Pending message. |

TABLE 4 (Continued)

| | |
|---|---|
| CANCELING RESERVE | This message appears when a printer reservation is cancelled or when reservation time limit has run out. The printer is then available to other users. |
| CANNOT CANCEL RESERVE BY N | This message appears when there is an attempt to cancel another user's printer reservation. A user can only cancel his own printer reservations. In the line Reserved by n, n refers a digit between 0 and 4. If 1, 2, 3 or 4 appears, it identifies te reserving user's port number. If 0 appears the printer is being reserved from the printer in system mode. |
| CANNOT CANCEL NOT RESERVED | This message appears when there is an attempt to cancel you own printer reservation. It can mean either that the time limit has run out, automatically canceling the reservation, or that the printer was not reserved. |
| CANNOT RESERVE | This message appears when there is an attempt to reserve the printer, but reservations are not allowed, having been preset at the system level. |
| CANNOT RESERVE INVALID REQUEST | This message appears when a reserve printer request is sent but the reserve command has been locked at the system level and cannot be used. |
| CANNOT RESERVE RESERVED BY N | This message appears when the user sends a reserve printer request, but another user has already reserved the printer. There can only be one printer reservation at a time. In the line Reserved by n, n refers a digit between 0 and 4. If 1, 2, 3, or 4 appears, it identifies the reserving user's port number. If 0 appears, the printer is being reserved from the printer in system mode. |
| SYSTEM PROBLEM NOT CALIBRATED | This message appears if you try to make a print before calibrating the printer for the first time, either correctly or incorrectly. |

TABLE 4 (Continued)

| | |
|---|---|
| CHANGE TO ALL WHITE SCREEN | This message prompts the user to create a white calibration screen. users. |

| | |
|---|---|
| CHANGE TO ALL BLACK SCREEN | This message prompts the user to create a black calibration screen. |

| | |
|---|---|
| CANNOT FIND SYNC | This message appears when the terminal is not turned on, and when the video adapter is cabled incorrectly to the video source. The message may also indicate that the video adapter termination switch settings are incorrect. |

| | |
|---|---|
| CANNOT FIND SIGNAL | This message appears when the user creates one of the calibration screens incorrectly, or the video adapter was cabled incorrectly to the video source. |

| | |
|---|---|
| CANNOT FIND PRIMARY | This message appears when the user incorrectly couples the video adapter to the video source. It may also indicate that one of the calibration screens was not created correctly. It may also appear if the user sets the video adapter's DIP switches incorrectly. |

| | |
|---|---|
| LEVEL OUT OF RANGE | This message appears when the calibration screens are incorrect, or when video adapter termination switch settings are incorrect. |

| | |
|---|---|
| PARAMETER OUT OF RANGE | This is a general error condition message that indicates the user may have entered the wrong number of pixels per horizontal line, or there is too much noise on the video signal, or that the video source is incompatible with the video adapter. It can also be generated if the calibration screen does not exactly fill the screen. |

13

TABLE 4 (Continued)

| SKEW OUT OF RANGE | This message appears when the cables connecting the video adapter to the video source are not the correct length. |

| PLL OUT OF RANGE | This message appears when the user entered the wrong number of pixels per horizontal line. |

| SYNC ERROR | This message appears when the video adapter termination switches are set incorrectly. It can also appear when the terminal is shut off, or the cables connecting the video adapter to the video source are disconnected during the calibration procedure. |

14

TABLE 5

PRINT CONTROL UNIT AT THE FRAME BUFFER

| MAIN MENU LEVEL | LEVEL 2 MENU | LEVEL 3 MENU | LEVEL 4 MENU |
|---|---|---|---|
| Function Menu?<br>Yes No | | | |
| | Reserve Printer?<br>Yes Cancel | | |
| | Confidence Test?<br>Yes No | | |
| | Go to Main Menu?<br>Yes No | | |
| Setup Menu?<br>Yes No | | | |
| | Limits Menu?<br>Yes No | | |
| | | Set Print Limit?<br>99 Prints | |
| | | Allow Reserve?<br>Yes No | |
| | | | Time Limit?<br>10 Minutes |
| | | Go to Main Menu?<br>Yes No | |
| Defaults Menu?<br>Yes No | | | |
| | Blk/Wht Invert?<br>Unlock Lock | | |
| | | Blk/Wht Invert?<br>Yes No | |
| | Image Size?<br>Unlock Lock | | |

TABLE 5 (CONTINUED)

PRINT CONTROL UNIT AT THE FRAME BUFFER

| MAIN MENU LEVEL | LEVEL 2 MENU | LEVEL 3 MENU | LEVEL 4 MENU |
|---|---|---|---|
| | | Image Size?<br>Std Max | |
| | Color Palette?<br>Unlock Lock | | |
| | | Color Palette?<br>8 4096 | |
| | | | Color Level?<br>Unlock Lock<br>-%Color Level<br>Red = 50<br><br>-%Color Level<br>Green = 50<br><br>-%Color Level<br>Blue = 50 |
| | Date/Time Stamp?<br>Unlock Lock | | |
| | | Date/Time Stamp?<br>Yes No | |
| | Media Type?<br>American Metric | | |
| | Go to Main Menu<br>Yes No | | |
| Date/Time Menu<br>Yes No | | | |
| | Set Date/Time?<br>yymmdd-hh:mm:ss | | |

**TABLE 5** (CONTINUED)

**PRINT CONTROL UNIT AT THE FRAME BUFFER**

| MAIN MENU LEVEL | LEVEL 2 MENU | LEVEL 3 MENU | LEVEL 4 MENU |
|---|---|---|---|
| Factory Default?<br>Yes  No<br><br>Go to Main Menu?<br>Yes  No<br><br>Self Test Menu?<br>Yes  No | | | |
| | Print Count?<br>Yes  No | | |
| | | Total =<br>Service = | |
| | Service Menu?<br>Yes  No | | |
| | | Select Test?<br>Test # = All<br><br>Loop on Test?<br>Yes  No<br><br>Run Tests?<br>Yes  Exit  Report | |
| | Display Logs?<br>History  Counts<br><br>Go to Main Menu?<br>Yes  No | | |

## TABLE 6

| MESSAGE WHEN PCU IS COUPLED TO FRAME BUFFER |
|---|
| Canceling<br>Reserve |
| Reserve<br>Pending |
| Reserve<br>Active |
| Cannot Reserve<br>Reserved by N |
| Cannot Cancel<br>Reserve by N |
| Cannot Cancel<br>Not Reserved |
| Wait<br>Memory Full |
| 4693RGB v. |
| Self Test |

With respect to calibration of the system, to ensure accurate reproduction of image (screen) color by the printer, it is important that the video adapter be calibrated to the display at time of installation or service of the system. In the system of the present invention, this calibration task can be performed simply and easily by a user. With the video adapter properly connected to the display terminal (i.e., upon proper connection of video signal cables between the video adapter to the display terminal, and appropriate setting of connector termination switches) and placement of the display in calibration or set-up mode, the user merely selects (at the display terminal) a calibration screen, and enters a number corresponding to the number of pixels per line of the display. The user first creates a calibration screen by selecting a bordered screen as shown in Fig. 10. (Optionally, selection of a white screen, followed by selection of a black screen can be made.) Thereafter, the user specifies the number of viewable pixels available on his display terminal. For example, after entering necessary housekeeping information such as type of terminal, the user enters information to turn off the screen's dimmer and to clear the screen, then after specifying color mode) he would create a black and white bordered image on the screen by setting an index (e.g., the number 1) to represent the color white, then setting the border to that index.

An example of the programs used by the processors in the video adapter and in the printer to accomplish this calibration and other tasks, in response to input from the print control unit, are shown in Appendix A.

The foregoing is a detailed description of the system of the present invention and its many advantages, including loss of calibration. The following is a brief summary of some of these advantages.

(a) Multiplicity of users can gain access to, and locally configure, a single printer hardcopy (printer) system normally dedicated to a single user. The user interface (print control) unit resident at each worksite conveys system status information to the user and allows the user to specify unique hardcopy environmentals (print control information differing from those of the other users connected to the shared printer).

(b) Minimal video signal degradation is realized owing to the close coupling of video signal pickoff to point of use. Video signals are acquired and converted to digital form locally (proximate to the display), then formatted and transferred to the Image Store/Printing station (print engine) of the printer via a substantially less bulky duplex fiber optic communication link.

(c) Distances between the display and printer are limited by video signal cable attenuation and differential propagation velocity characteristics which are common in conventional systems.

(d) Acquisition and conversion/formatting of high frequency analog video signals to digital signals locally at the users worksite allow communication of the digital data to the Image Store/Printer Engine modules via low cost media which need not be electrically conductive nor require the same bandwidth as the video source.

The printer employs a fiber optic communication link operating at < 10.5 Mhz to receive transmitted video data. Owing to the non-conductive nature of the communication link, system certification/compliance with regulatory standards for EMI and safety is eased.

(e) The communication protocol between the Video Acquisition Module(s) and the Image Store/Printer Engine Modules is defined and expandable allowing several system types or Video Acquisition Module(s) of varied capabilities to share a printer. Mixed display environments and feature sets and system updates may be introduced into an established screen hard copy environment without the user having to make obsolete existing equipment.

## Claims

(1) Method of controlling the printing of displayed images including the steps of:
acquiring video parallel analog RGB data representing multiple displayed images;
converting the RGB parallel analog data to parallel digital data;
converting the parallel digital data to encoded serial digital data;
transmitting the encoded serial digital data via a communications link;
receiving and reconverting the transmitted data from serial form to parallel digital form; and
storing the reconverted data for subsequent printing.

COAXIAL

FIG.1

11

FIG.7

LINE 1 → MAKE PRINT ?
LINE 2 → PRINT 1

NEXT

OPTION

GO

ACTIVE DISPLAY
AREA (BLACK)

BORDER (WHITE)
(ONE PIXEL LINE WIDE
ALL AROUND ACTIVE AREA)

FIG.10

# DISTRIBUTIVE VIDEO ACQUISITION/CONTROL SYSTEM

23

## VIDEO ADAPTER/ACQUISITION MODULE

33

A/D CONVERTER DIGITIZER 55

51

**SAMPLER**

**SYNC**

53

RGB DIGITAL DATA (PARALLEL)

57

**FORMATTER/ ENCODER/ DECODER**

**PROCESSOR** 65

41 SERIAL LINK

DIGITAL DATA (SERIAL)

(FIBER OPTIC)

49

**MULTIPLEXER**

**REFORMATTER/ DECODER/ ENCODER**

**FRAME BUFFER**

**IMAGE PROCESSOR**

**PRINT ENGINE**

PRINTER

RGB VIDEO ANALOG DATA FROM DISPLAY TERMINAL (PARALLEL)

25

**PRINT CONTROL UNIT**

DATA FROM/TO OTHER DISPLAY TERMINALS, VIDEO ADAPTERS, PRINT CONTROL UNITS

FIG.2

EP 0 353 909 A2

FIG.3

FIG. 4A

FORMATTER ENCODER/DECODER
SERIAL LINK ADAPTER

60

FIFO MEMORY 61
Din          Dout
INPUT    OUPUT
STROBE  STROBE

VIDEO/DIAG
DATA

MANCHESTER
DATA ENCODER
Din        SERIAL
           OUT
        STROBE
CONTROL

FIBER OPTIC
COMMUNICATION
HDATA

SYN    T    H
CONT  DAT  DAT

DATA TO AND
FROM PRINTER

A

SAMPLE DATA
uP DATA       57

MODE, ENABLE, ETC
μP DATA

62

B
C
D

μP
DATA

μP
DATA

SEGMENT MODULUS
HREF      SEGMENT
             TC
PHASE OFFSET
VIDEO PLL

MODE/CONTROL
STC      STROBE
Vact
PLL TIMING
GENERATOR

E

V IMAGE JUSTIFY
Vsync      Yact
VERICAL
DELAY/ACT

F

μP
DATA

COMPOSITE  Csync
SYNC
SYNC
SEPERATOR

G

MUXED ANALOG
REF GEN
VID DC    PHASE
      WHITE REF
      BLACK REF
D-A DATA  SYN

H

I
J

μP
DATA

25

PRINT
CONTROL
UNIT

(USER IF)

K
L
M
N

R DAT
T DAT

FIG.4B

33(35,37,39)

VIDEO ADAPTOR

| HOST TERM/ DISPLAY | R<br>G<br>B | VIDEO BUFFER & MUX | A-D CONVERSION | DATA RATE SMOOTHING & FORMATTING | | |
|---|---|---|---|---|---|---|
| | H/C<br>V | IMAGE JUSTIFICATION AND SAMPLE CONTROL | | | LOCAL SMARTS (up. mem) | FO COM PORT |

25(27,29,31)

PCU

PCU

41(43,45,47)

ADDITIONAL VIDEO ADAPTORS

| LOCAL SMARTS (up, mem) | PORT 3 | PORT 2 | PORT 1 | PORT 0 | } 49 |
|---|---|---|---|---|---|
| | INPUT MULTIPLEXER | | | | |
| | INPUT MEMORY CONTROLLER | | | | |
| REAL TIME CLOCK CALENDER | IMAGE MEMORY | | | | |
| | OUTPUT MEMORY CONTROLLER | | | | |
| THERMAL WAX PRINT ENGINE | | | | | |
| PRINT ENGINE/FRAME BUFFER | | | | | |

FIG.5

FIG.6

FIG. 8

FIG. 9

APPENDIX A

```
/*
 *      NAME              Ui_SendCommand -- Communicate with the host task.
 *
 *      SYNOPSIS
 *
 *      DESCRIPTION       Send a command to the host task and wait until it
 *                        returns the message.
 *
 *      ASSUMPTIONS
 *
 *      DIAGNOSTICS
 */
void
Ui_SendCommand(Token)
  BYTE Token;
{
  UI_MSG_TYPE *Message;
  BOOL MessageBack;
#ifdef DEBUG
  BYTE buffer[6];
  BYTE *buf_ptr = buffer;
#endif

  Ui_Message_Ptr->Token = Token;
  switch (Token)
  {
    case SETPRM_TOKEN:
      if ((Ui_ParmValue == Ui_SaveParmValue) &&
          (Ui_ParmLocked == Ui_SaveParmLocked))
        goto exit_func;
      Ui_Message_Ptr->p.Parm_Value = (Ui_ParmLocked) ?
                                     (Ui_ParmValue | PARM_NO_MOD) :
                                     Ui_ParmValue;
      break;
    case REQPRM_TOKEN:
      Ui_Message_Ptr->Parm_Name = Ui_ParmName;
      break;
    default:
      Ui_Message_Ptr->p.Parm_Value = Ui_ParmValue;
      break;
  }
  Put_Msg((BYTE *) Ui_Message_Ptr, Ui_System_Task_Ptr);

  for (MessageBack = FALSE; !MessageBack; )   /* Wait for returned message */
  {
    Message = (UI_MSG_TYPE *) Get_Msg();
    switch (Message->Id)
    {
      case UISTAT_TOKEN:                   /* If it is a status message, save it */
      case GENTMR_TOKEN:
        if (Ui_MessageWaiting != NULL)              /* Discard any previous one */
          Free_Buf((BYTE *) Ui_MessageWaiting);
        Ui_MessageWaiting = Message;
        break;
      case UIPAUS_TOKEN:                            /* pause the UI */
        Ui_Pause(&((BYTE *) Message));
      case UIBUTT_TOKEN:                            /* Button press, toss it */
        Free_Buf((BYTE *) Message);
        break;
      case UICMD_TOKEN:                   /* The message is back */
        MessageBack = TRUE;
        break;
      default:                            /* shouldn't happen */
```

```
/* (c) Copyright $Date: 88/07/27 14:34:55 $ Tektronix, Inc.,
 * P.O. Box 500, Beaverton, Oregon 97077.
 * Licensed Material - Program Property of Tektronix. All rights reserved.
 *
 * If acquired subject to DFARS Section 52.227-7013, the following shall apply:
 *
 *                      RESTRICTED RIGHTS LEGEND
 *
 * Use, duplication, or disclosure by the Government is subject to restrictions
 * as set forth in subdivision (b) (3) (ii) of the Rights in Technical Data and
 * Computer Software clause at 52.227-7013.
 *
 * This program is the property of Tektronix, Inc. or others from whom Tektronix
 * has obtained a licensing right, and is considered by Tektronix to be
 * confidential. It is protected by U.S. copyright law as an unpublished work
 * and is furnished pursuant to a written license agreement. It may not be
 * used, copied or otherwise reproduced, or disclosed to others except in
 * accordance with the terms and conditions of that agreement.
 *
 * $Header: ui_func.c,v 1.38 88/07/27 14:34:55 alanz Exp $$Locker:  $
 *
 *      NAME            ui_func.c  4693 rgb user interface state functions.
 *
 *      DESCRIPTION
 *
 *      ASSUMPTIONS
 *
 *      INCLUDES
 */
#include "stdio.h"
#include "protocol.h"
#include "eh_codes.h"
#include "ui.h"
#include "hcll.h"
#ifdef FRAME
#include "fb_hard.h"
#endif
/*
 *      FILES
 *
 *      SEE ALSO
 *
 *      DIAGNOSTICS
 *
 *      BUGS
 *
 *      HISTORY         $Log:   ui_func.c,v $
 *
 *      EXTERNALS
 */
#ifdef VIDEO
    BYTE    UI_IsPaused_Flag = FALSE;
#endif
```

```
/*
 *      NAME            Ui_Select -- General function for next key.
 *
 *      SYNOPSIS
 *
 *      DESCRIPTION     Return next state.  Watch out for a wrap around
 *                      situation.
 *
 *      ASSUMPTIONS
 *
 *      DIAGNOSTICS
 */
#define NO_DIAGNOSTICS  0x80

BYTE
Ui_Select()
{
  BYTE NextState;

  switch (Ui_States[UI_CurrentState].Select)
  {
    case 0:
#ifdef VIDEO
      NextState = ((UI_CurrentState == UI_FUNCTIONMENU_STATE) &&
                    (hcll.porte_reg & NO_DIAGNOSTICS))            ?
#else                                                    /* FRAME buffer only */
      NextState = ((UI_CurrentState == UI_SETUPMENU_STATE) &&
                    (*mem(COPIER_INPUT_HIGH) & NO_DIAGNOSTICS)) ?
#endif
                    UI_HOME_STATE : Ui_States[UI_CurrentState].NextButton;
      break;
    case SEL_WRAP:
      NextState = Ui_SelectWrap;
      break;
#ifdef FRAME
    case SEL_LOCK:
      if (!Ui_ParmLocked)
      {
        Ui_Message_Ptr->Parm_Name = Ui_ParmName;
        Ui_SendCommand(SETPRM_TOKEN);
        NextState = Ui_States[UI_CurrentState].NextButton;
      }
      else
        switch (UI_CurrentState)
        {
          case UI_LOCKINVERT_STATE:
            NextState = UI_BLKWHTINVERT_STATE;
            break;
          case UI_LOCKSIZE_STATE:
            NextState = UI_IMAGESIZE_STATE;
            break;
          case UI_LOCKPALETTE_STATE:
            NextState = UI_COLORPALETTE_STATE;
            break;
          case UI_LOCKCOLOR_STATE:
            NextState = UI_SETRCOLOR_STATE;
            break;
          case UI_LOCKSTAMPING_STATE:
            NextState = UI_STAMP_STATE;
            break;
        }
      break;
#endif
```

```
#ifdef DEBUG
        buffer[0] = ' ';
        buf_ptr = &buffer[1];
        buf_ptr = UT_btoa(Message->Id, buf_ptr);
        buf_ptr = UT_btoa(Message->Token, buf_ptr);
        puts(buffer);
#endif
        Error_Handler((BYTE) UI_STATE_TASK_NAME, (BYTE) SOFTWR_ERROR); /*die*/
        break;
    }
  }
exit_func:
  return;
}
```

```
/*
 *      NAME            Ui_Option -- General function for option key.
 *
 *      SYNOPSIS
 *
 *      DESCRIPTION
 *
 *      ASSUMPTIONS
 *
 *      DIAGNOSTICS
 */
void
Ui_Option()
{
  PARM_COUNT_TYPE  *CountParm;
  PARM_LIST_TYPE   *ListParm;
  PARM_NUMBER_TYPE *NumbersParm;

  switch (Ui_States[UI_CurrentState].Option)
  {
    case 0:
      break;
    case OPT_COUNT_PARM:
      CountParm = (PARM_COUNT_TYPE *) Ui_States[UI_CurrentState].Parameter;
      if (*CountParm->Variable == *CountParm->MaxPtr)
        *CountParm->Variable = *CountParm->MinPtr;
      else
        (*CountParm->Variable)++;
      break;
    case OPT_LIST_PARM:
      ListParm = (PARM_LIST_TYPE *) Ui_States[UI_CurrentState].Parameter;
#ifdef VIDEO
      if (!Ui_ParmLocked)
#endif
      if (*ListParm->Variable == ListParm->NumChoices - 1)
        *ListParm->Variable = 0;
      else
        (*ListParm->Variable)++;
      break;
    case OPT_NUMBERS_PARM:
      NumbersParm = (PARM_NUMBER_TYPE *) Ui_States[UI_CurrentState].Parameter;
#ifdef VIDEO
      if (!Ui_ParmLocked)
#endif
      if (*NumbersParm->Variable == *NumbersParm->NumChoices - 1)
        *NumbersParm->Variable = 0;
      else
        (*NumbersParm->Variable)++;
      break;
    case OPT_STRING_PARM:
      if (Ui_SaveString[Ui_DplPos] == '9')
        Ui_SaveString[Ui_DplPos] = '0';
      else
        Ui_SaveString[Ui_DplPos]++;
      break;
  }
  return;
}
```

```
      case SEL_PARMVALUE:
        if (Ui_ParmValue)
          NextState = Ui_States[UI_CurrentState].NextButton;
        else
          switch (UI_CurrentState)
          {
#ifdef VIDEO
            case UI_PRINTMODE_STATE:
              NextState = UI_COLORPALETTE_STATE;
              break;
#else                                              /* FRAME buffer only */
            case UI_ALLOWINSTALL_STATE:
              NextState = UI_ALLOWRESERVE_STATE;
              break;
            case UI_ALLOWRESERVE_STATE:
              NextState = UI_RESERVETIME_STATE;
              break;
            case UI_COLORPALETTE_STATE:
              NextState = UI_LOCKCOLOR_STATE;
              break;
#endif
          }
        break;
      case SEL_PARM_INPUT:
        if (Ui_DplPos == (strlen(Ui_SaveString) - 1))
        {
          NextState = Ui_States[UI_CurrentState].NextButton;
#ifdef FRAME
          Ui_DplPos = 0;
#endif
        }
        else
        {
          NextState = UI_CurrentState;
          Ui_DplPos++;
#ifdef FRAME
          if (UI_CurrentState == UI_DATETIME_STATE &&
              (Ui_DplPos == 6 || Ui_DplPos == 9 || Ui_DplPos == 12))
            Ui_DplPos++;
#endif
        }
        break;
#ifdef VIDEO
      case SEL_RGB_PRINT:
        switch (UI_CurrentState)
        {
          case UI_REDPRINT_STATE:
            Ui_ParmName = UI_REDPRINT_PARM;
            break;
          case UI_GREENPRINT_STATE:
            Ui_ParmName = UI_GREENPRINT_PARM;
            break;
          case UI_BLUEPRINT_STATE:
            Ui_ParmName = UI_BLUEPRINT_PARM;
            break;
        }
        Ui_SendCommand(SETPRM_TOKEN);
        NextState = Ui_States[UI_CurrentState].NextButton;
        break;
#endif
  }
  return (NextState);
}
```

```
                NextState = UI_LIMITSMENU_STATE;
                break;
              case UI_LIMITSMENU_STATE:
                NextState = UI_PRINTLIMIT_STATE;
                break;
              case UI_DEFAULTSMENU_STATE:
                NextState = UI_LOCKINVERT_STATE;
                break;
              case UI_DATETIMEMENU_STATE:
                NextState = UI_DATETIME_STATE;
                break;
              case UI_SELFTESTMENU_STATE:
                NextState = UI_SERVICEMENU_STATE;
                break;
#endif
          }
#ifdef VIDEO
          if (UI_CurrentState == UI_FINECALMENU_STATE)
            Ui_SelectWrap = UI_MAKECALPRINTS_STATE;
          else
#endif
            Ui_SelectWrap = NextState;
        }
        break;
      case GO_SET_DEFAULT:
        if (!Ui_YesNo)
        {
            Ui_SendCommand(SETDEF_TOKEN);
#ifdef VIDEO
            Ui_ParmName = Ui_Message_Ptr->Parm_Name;
#endif
        }
        break;
      case GO_RESERVE_PRINTER:
        if (Ui_YesNo)
          Ui_SendCommand(CLRRES_TOKEN);
        else
          Ui_SendCommand(RESREQ_TOKEN);
        NextState = Ui_Message_Ptr->Token;
#ifdef VIDEO
        Ui_ParmName = Ui_Message_Ptr->Parm_Name;
#endif
        break;
      case GO_CONFIDENCE_TEST:
        if (!Ui_YesNo)
        {
            Ui_SendCommand(UCTREQ_TOKEN);
            NextState = Ui_Message_Ptr->Token;
#ifdef VIDEO
            Ui_ParmName = Ui_Message_Ptr->Parm_Name;
#endif
        }
        break;
#ifdef VIDEO
      case GO_PRINT:
        Ui_ParmValue = Ui_NumCopies;
        Ui_SendCommand(CPYREQ_TOKEN);
        NextState = Ui_Message_Ptr->Token;
        Ui_ParmName = Ui_Message_Ptr->Parm_Name;
        break;
      case GO_CANCEL_PRINT:
        if (Ui_YesNo)
          Ui_SendCommand(CLRCP2_TOKEN);
        else
```

```
/*
 *      NAME            Ui_Go -- General function for go key.
 *
 *      SYNOPSIS
 *
 *      DESCRIPTION
 *
 *      ASSUMPTIONS
 *
 * VERY IMPORTANT: After sending a command, one cannot go to a state
 * whose entry will cause the sending of another command since the
 * system does not want any command to be sent while one is in progress.
 * Stay on same state and do nothing
 *
 *      DIAGNOSTICS
 */
BYTE
Ui_Go()
{
  BYTE NextState;

  NextState = UI_HOME_STATE;
  switch (Ui_States[UI_CurrentState].Go)
  {
    case 0:
      break;
    case GO_MENU:
      if (Ui_YesNo)
        NextState = Ui_Select();
      else
      {
        switch (UI_CurrentState)
        {
          case UI_FUNCTIONMENU_STATE:
            NextState = UI_RESERVEPRINTER_STATE;
            break;
          case UI_GOTOMAINMENU_STATE:
            break;
          case UI_SERVICEMENU_STATE:
#ifdef VIDEO
            CI_Go_Offline();
#else

            /* turn off the light pipe to let VAs know FB not available */

            *mem(PORT_CONTROL) = ~(NO_TP0_ENABLE | NO_TP1_ENABLE |
                                   NO_TP2_ENABLE | NO_TP3_ENABLE);
            hc11.sccr2_reg = SCI_TRANSMIT_ENABLE | SCI_SEND_BREAK;
#endif
            DI_Serv();              /* never returns, requires power cycle */
            break;
#ifdef VIDEO
          case UI_FEATURESMENU_STATE:
            NextState = UI_BLKWHTINVERT_STATE;
            break;
          case UI_INSTALLMENU_STATE:
            NextState = UI_SELECTSIZE_STATE;
            break;
          case UI_FINECALMENU_STATE:
            NextState = UI_MAKECALPRINTS_STATE;
            break;
#else                                                   /* FRAME buffer only */
          case UI_SETUPMENU_STATE:
```

```
/*
 *      NAME            Ui_Valid()
 *
 *      SYNOPSIS
 *
 *      DESCRIPTION
 *
 *      ASSUMPTIONS
 *
 *      DIAGNOSTICS
 */
BOOL
Ui_Valid()
{
  BYTE *ParmStruc;
#ifdef FRAME
  BYTE NextState;
#endif

  switch (Ui_States[UI_CurrentState].Valid)
  {
    case VALID_GENERAL:
      ParmStruc = Ui_States[UI_CurrentState].Parameter;
      break;
#ifdef FRAME
    case VALID_LOCK:
        switch (UI_CurrentState)
          {
            case UI_LOCKINVERT_STATE:
              NextState = UI_BLKWHTINVERT_STATE;
              break;
            case UI_LOCKSIZE_STATE:
              NextState = UI_IMAGESIZE_STATE;
              break;
            case UI_LOCKPALETTE_STATE:
              NextState = UI_COLORPALETTE_STATE;
              break;
            case UI_LOCKCOLOR_STATE:
              NextState = UI_SETRCOLOR_STATE;
              break;
            case UI_LOCKSTAMPING_STATE:
              NextState = UI_STAMP_STATE;
              break;
          }
      ParmStruc = Ui_States[NextState].Parameter;
      break;
#endif
  }
  Ui_ParmName = *ParmStruc;
  Ui_SendCommand(REQPRM_TOKEN);
  Ui_SaveParmValue = Ui_Message_Ptr->p.Parm_Value;
  if (Ui_SaveParmValue & PARM_NOT_AVAIL)
    return (FALSE);
  else
  {
    Ui_ParmLocked = (Ui_SaveParmValue & PARM_NO_MOD) ? 1 : 0;
    Ui_SaveParmLocked = Ui_ParmLocked;
    Ui_SaveParmValue &= PARM_VALUE;
    Ui_ParmValue = Ui_SaveParmValue;
    return (TRUE);
  }
}
```

```
        Ui_SendCommand(CLRCP1_TOKEN);
      NextState = Ui_Message_Ptr->Token;
      Ui_ParmName = Ui_Message_Ptr->Parm_Name;
      break;
    case GO_SELECT_SIZE:
      Ui_ParmValue = Ui_Resolution[Ui_ResIndex];
      Ui_SendCommand(CALHST_TOKEN);
      NextState = Ui_Message_Ptr->Token;
      Ui_ParmName = Ui_Message_Ptr->Parm_Name;
      break;
    case GO_ENTER_SIZE:
      Ui_ParmValue = atoi(Ui_SaveString);
      Ui_SendCommand(CALHST_TOKEN);
      NextState = Ui_Message_Ptr->Token;
      Ui_ParmName = Ui_Message_Ptr->Parm_Name;
      break;
    case GO_MAKECALPRINTS:
      if (!Ui_YesNo)
      {
        Ui_ParmValue = FINE_CAL_OPTION;
        Ui_SendCommand(CALHST_TOKEN);
        NextState = Ui_Message_Ptr->Token;
        Ui_ParmName = Ui_Message_Ptr->Parm_Name;
      }
      break;
    case GO_RGB_PRINT:
      Ui_ParmValue |= PARM_NOT_AVAIL;
      Ui_Select();
      break;
#else                                            /* FRAME buffer only */
    case GO_EDIT_COUNT:
      *((LWORD *) Ui_ParmValue) = atol(Ui_SaveString);
      Ui_SaveParmValue = 0;
      Ui_ParmLocked = 0;
    case GO_LOCK:
      Ui_SendCommand(SETPRM_TOKEN);
      break;
#endif
  }
  return (NextState);
}
```

```
#ifdef VIDEO
    if ((ListParm->Orientation == LIST_VERTICAL) || Ui_ParmLocked)
#else
    if (ListParm->Orientation == LIST_VERTICAL)
#endif
    {                   /* Vertical list or parm locked, display current item only */
        i = ListParm->FirstStr + *ListParm->Variable;
        Len = strlen(Ui_LanguageBase[Ui_CurrentLanguage][i]);
        memcpy(&Ui_DplBuffer[1 + DISPLAY_COLS],
               Ui_LanguageBase[Ui_CurrentLanguage][i], Len);
        Ui_H1X = 0;
#ifdef VIDEO
        if (Ui_ParmLocked)
            Ui_HlLen = 0;
        else
#endif
            Ui_HlLen = Len;
    }
    else        /* Horizontal list, display all and hilight the current string*/
    {
        for (i = 0, x = 0; i < ListParm->NumChoices; i++)
        {
            j = ListParm->FirstStr + i;
            Len = strlen(Ui_LanguageBase[Ui_CurrentLanguage][j]);
            memcpy(&Ui_DplBuffer[x + DISPLAY_COLS],
                   Ui_LanguageBase[Ui_CurrentLanguage][j], Len);
            if (i == *ListParm->Variable)               /* hilight current item */
            {
                Ui_H1X = x;
                Ui_HlLen = Len;
            }
            x += Len;
        }
    }
    break;
  case OPT_STRING_PARM:             /* Only one digit is highlighted at a time */
    memcpy(&Ui_DplBuffer[DISPLAY_COLS], Ui_SaveString, strlen(Ui_SaveString));
    Ui_H1X = Ui_DplPos;
    Ui_HlLen = 1;
    break;
  }
  Ui_FreshText = TRUE;
  return;
}
```

```
/*
 *      NAME            Ui_DisplayState - Function to display a state upon entry
 *
 *      SYNOPSIS
 *
 *      DESCRIPTION
 *
 *      ASSUMPTIONS
 *
 *      DIAGNOSTICS
 */
void
Ui_DisplayState()
{
  PARM_COUNT_TYPE     *CountParm;
  PARM_LIST_TYPE      *ListParm;
  PARM_NUMBER_TYPE    *NumbersParm;
  BYTE                Len;
  BYTE                x;
  BYTE                i;
  BYTE                j;

  switch (Ui_States[UI_CurrentState].Option)
  {
    case 0:
      Ui_HlX = 0;
      Ui_HlLen = 0;
      break;
    case OPT_NUMBERS_PARM:
      NumbersParm = (PARM_NUMBER_TYPE *) Ui_States[UI_CurrentState].Parameter;
      Ui_DplInt(NumbersParm->Choices[*NumbersParm->Variable],
                NumbersParm->X, NumbersParm->Len);
#ifdef VIDEO
      if (Ui_ParmLocked)
      {
        Ui_HlX = 0;
        Ui_HlLen = 0;
      }
      else
#endif
      {
        Ui_HlX = NumbersParm->X;
        Ui_HlLen = NumbersParm->Len;
      }
      break;
    case OPT_COUNT_PARM:
      CountParm = (PARM_COUNT_TYPE *) Ui_States[UI_CurrentState].Parameter;
      Ui_DplInt(*CountParm->Variable, CountParm->X, CountParm->Len);
#ifdef VIDEO
      if (Ui_ParmLocked)
      {
        Ui_HlX = 0;
        Ui_HlLen = 0;
      }
      else
#endif
      {
        Ui_HlX = CountParm->X;
        Ui_HlLen = CountParm->Len;
      }
      break;
    case OPT_LIST_PARM:
      ListParm = (PARM_LIST_TYPE *) Ui_States[UI_CurrentState].Parameter;
```

```
/*
 *      NAME            in_Check_UI()
 *
 *      SYNOPSIS        act on the stored message
 *
 *      DESCRIPTION
 *
 *      ASSUMPTIONS     only called if a message is stored
 *
 *      DIAGNOSTICS
 */
void
in_Check_UI()
{
  JOB_CONTROL_BLOCK_TYPE *JCB_Ptr;
  BYTE *message_ptr;
  BYTE str_array[12];
  BYTE *str_ptr;
  BYTE i;

  switch (SI_UI_Msg_Ptr->Token)
  {
    case RESREQ_TOKEN:                      /* define this operation */
      if (IN_Status_Byte & COPIER_RESERVED)
      {
        SI_UI_Msg_Ptr->Token = UI_TRANSITION_STATE;
        UI_Redisplay[1] = UI_CANNOTRESERVE_STR;
        UI_Redisplay[2] = UI_RESERVEDBY_STR;
        UI_Redisplay[3] = IN_Status_Byte & RESERVED_PORT;
      }
      else
      {
        SI_UI_Msg_Ptr->Token = UI_REDISPLAY_STATE;
        UI_Redisplay[0] = UI_REDISPLAY_STATE;
        if (SP_First_JCB_Ptr == NULL)
          In_Reserve_Timer();
        else
        {
          UI_Redisplay[1] = UI_RESERVE_STR;
          UI_Redisplay[2] = UI_PENDING_STR;
          In_Last_Redisplay = UI_PENDING_STR;
          IN_Status_Byte |= COPIER_RESERVED | STATUS_CHANGED;
        }
      }
      break;
    case CLRRES_TOKEN:
      SI_UI_Msg_Ptr->Token = UI_TRANSITION_STATE;
      UI_Redisplay[3] = IN_Status_Byte & RESERVED_PORT;
      if (UI_Redisplay[3])
      {
        UI_Redisplay[1] = UI_CANNOTCANCEL_STR;
        UI_Redisplay[2] = UI_RESERVEDBY_STR;
      }
      else
      {
        if (!(IN_Status_Byte & COPIER_RESERVED))
        {
          UI_Redisplay[1] = UI_CANNOTCANCEL_STR;
          UI_Redisplay[2] = UI_NOTRESERVED_STR;
        }
        else
          In_Reserve_Cancel((BOOL) TRUE);
      }
```

```
/*
 * (c) Copyright $Date: 87/06/12 11:00:59 $ Tektronix, Inc.,
 * P.O. Box 500, Beaverton, Oregon 97077.
 * Licensed Material - Program Property of Tektronix.  All rights reserved.
 *
 * If acquired subject to DFARS Section 52.227-7013, the following shall apply:
 *
 *                     RESTRICTED RIGHTS LEGEND
 *
 * Use, duplication, or disclosure by the Government is subject to restrictions
 * as set forth in subdivision (b) (3) (ii) of the Rights in Technical Data and
 * Computer Software clause at 52.227-7013.
 *
 * This program is the property of Tektronix, Inc. or others from whom Tektronix
 * has obtained a licensing right, and is considered by Tektronix to be
 * confidential.  It is protected by U.S. copyright law as an unpublished work
 * and is furnished pursuant to a written license agreement.  It may not be
 * used, copied or otherwise reproduced, or disclosed to others except in
 * accordance with the terms and conditions of that agreement.
 *
 * $Header: in_ui.c,v 1.1 87/06/12 11:00:59 alanz Exp $$Locker: jim $
 *
 *      NAME            in_ui - the input task's user interface
 *
 *      DESCRIPTION
 *
 *      ASSUMPTIONS
 *
 *      INCLUDES
 */
#include "frame.h"
#include "sio.h"
#include "ui_state.h"
#include "spi_rtc.h"
#include "ee_fbdat.h"
/*
 *      SEE ALSO
 *
 *      DIAGNOSTICS
 *
 *      BUGS
 *
 *      HISTORY         $Log:   in_ui.c,v $
 */
```

```
      case DEFAULT_DITHER_NONE:
        SI_UI_Msg_Ptr->p.Parm_Value = 1;
        break;
      case DEFAULT_DITHER_NOT:
        SI_UI_Msg_Ptr->p.Parm_Value = PARM_NOT_AVAIL;
        break;
      case DEFAULT_DITHER_NO:
        SI_UI_Msg_Ptr->p.Parm_Value = PARM_NO_MOD;
        break;
      case DEFAULT_DITHER_YES:
        SI_UI_Msg_Ptr->p.Parm_Value = (PARM_NO_MOD | 1);
        break;
    }
    break;
  case UI_SWINVERT_PARM:
    i = (In_Default_1 & DEFAULT_INVERT);
    switch (i)
    {
      case DEFAULT_INVERT_NONE:
        SI_UI_Msg_Ptr->p.Parm_Value = 1;
        break;
      case DEFAULT_INVERT_NOT:
        SI_UI_Msg_Ptr->p.Parm_Value = PARM_NOT_AVAIL;
        break;
      case DEFAULT_INVERT_NO:
        SI_UI_Msg_Ptr->p.Parm_Value = (PARM_NO_MOD | 1);
        break;
      case DEFAULT_INVERT_YES:
        SI_UI_Msg_Ptr->p.Parm_Value = PARM_NO_MOD;
        break;
    }
    break;
  case UI_SIZE_PARM:
    i = (In_Default_1 & DEFAULT_INTERPOLATE);
    switch (i)
    {
      case DEFAULT_INTERPOLATE_NONE:
        SI_UI_Msg_Ptr->p.Parm_Value = 1;
        break;
      case DEFAULT_INTERPOLATE_NOT:
        SI_UI_Msg_Ptr->p.Parm_Value = PARM_NOT_AVAIL;
        break;
      case DEFAULT_INTERPOLATE_NO:
        SI_UI_Msg_Ptr->p.Parm_Value = PARM_NO_MOD;
        break;
      case DEFAULT_INTERPOLATE_YES:
        SI_UI_Msg_Ptr->p.Parm_Value = (PARM_NO_MOD | 1);
        break;
    }
    break;
  case UI_STAMP_PARM:
    i = (IN_Default_2 & DEFAULT_JOB_TAG);
    switch (i)
    {
      case DEFAULT_JOB_TAG_NONE:
        SI_UI_Msg_Ptr->p.Parm_Value = 1;
        break;
      case DEFAULT_JOB_TAG_NOT:
        SI_UI_Msg_Ptr->p.Parm_Value = PARM_NOT_AVAIL;
        break;
      case DEFAULT_JOB_TAG_NO:
        SI_UI_Msg_Ptr->p.Parm_Value = (PARM_NO_MOD | 1);
        break;
      case DEFAULT_JOB_TAG_YES:
```

EXAMPLE: "Supervisor" control code

```
    break;
  case UCTREQ_TOKEN:
    if (!UI_Redisplay[0] || UI_Redisplay[2] != UI_ACTIVE_STR ||
        MM_Free_End_Ptr->Size != MM_Max_Size)
    {
      UI_Redisplay[0] = UI_TRANSITION_STATE;
      UI_Redisplay[1] = UI_SYSTEMERROR_STR;
      UI_Redisplay[2] = UI_NOTRESERVED_STR;
      SI_UI_Msg_Ptr->Token = UI_TRANSITION_STATE;
    }
    else
    {
      message_ptr = Get_Buf(UI_Pool_Ptr);
      if (message_ptr == NULL)
        Error_Handler((BYTE) INPUT_TASK_NAME, (BYTE) UIBUF_ERROR);
      *message_ptr = UIPAUS_TOKEN;
      Put_Msg(message_ptr, UI_Task_Ptr);                  /* pause UI */
      JCB_Ptr = (JOB_CONTROL_BLOCK_TYPE *) Get_Buf(JCB_Pool_Ptr);
      if (JCB_Ptr == NULL)
        Error_Handler((BYTE) INPUT_TASK_NAME, (BYTE) JCBBUF_ERROR);
      JCB_Ptr->Port = 0;
      JCB_Ptr->Mode_1 = 0;
      JCB_Ptr->Mode_2 = PAPER_MEDIA;
      JCB_Ptr->Copy_Count = 1;
      JCB_Ptr->Image_Size = 1;
      In_Current_Job.Addr_Off = 1L;
      message_ptr = Get_Buf(Task_Pool_Ptr);
      if (message_ptr == NULL)
        Error_Handler((BYTE) INPUT_TASK_NAME, (BYTE) TSKBUF_ERROR);
      *message_ptr = MALLOC_TOKEN;
      ((MM_MSG_TYPE *) message_ptr)->JCB_Ptr = JCB_Ptr;
      Put_Msg(message_ptr, MM_Task_Ptr);                  /* alloc memory */
      message_ptr = In_Get_Msg();                         /* wait for alloc */
      if (*message_ptr != MALLOC_TOKEN)
        Error_Handler((BYTE) INPUT_TASK_NAME, (BYTE) SOFTWR_ERROR);
      Free_Buf(message_ptr);
      In_Test_Out(JCB_Ptr);
      JCB_Ptr->Message_ID = ENQUEUE_JCB_TOKEN;
      JCB_Ptr->Next_JCB = NULL;
      Put_Msg((BYTE *) JCB_Ptr, SP_Task_Ptr);             /* enqueue the JCB */
      if (!In_Conf_Error)
        SI_UI_Msg_Ptr->Token = UI_HOME_STATE;
      else
      {
        SI_UI_Msg_Ptr->Token = UI_TRANSITION_STATE;
        UI_Redisplay[1] = UI_SYSTEMERROR_STR;
        UI_Redisplay[2] = UI_ERRORCODE_STR;
        UI_Redisplay[3] = In_Conf_Error;
      }
    }
    break;
  case SETDEF_TOKEN:
    IN_Init_Parm();
    break;
  case REQPRM_TOKEN:
    switch (SI_UI_Msg_Ptr->Parm_Name)
    {
      case UI_MAXPRINTS_PARM:
        SI_UI_Msg_Ptr->p.Parm_Value = In_Limits_Byte;
        break;
      case UI_COLORPALETTE_PARM:
        i = (In_Default_1 & DEFAULT_DITHER);
        switch (i)
        {
```

```
      }
   break;
case SETPRM_TOKEN:
   switch (SI_UI_Msg_Ptr->Parm_Name)
   {
     case UI_MAXPRINTS_PARM:
       In_Limits_Byte = SI_UI_Msg_Ptr->p.Parm_Value;
       In_EE_Error |= EE_Write(&In_Limits_Byte, &EE_Limits_Byte, 1);
       IN_Status_Byte |= STATUS_CHANGED;
       break;
     case UI_COLORPALETTE_PARM:
       In_Default_1 &= ~DEFAULT_DITHER;
       switch (SI_UI_Msg_Ptr->p.Parm_Value)
       {
         case PARM_NOT_AVAIL:
           In_Default_1 |= DEFAULT_DITHER_NOT;
         case 0:
           break;
         case PARM_NO_MOD:
           In_Default_1 |= DEFAULT_DITHER_NO;
           break;
         case (PARM_NO_MOD | 1):
           In_Default_1 |= DEFAULT_DITHER_YES;
           break;
       }
       In_EE_Error |= EE_Write(&In_Default_1, &EE_Default_1, 1);
       IN_Status_Byte |= STATUS_CHANGED;
       break;
     case UI_BWINVERT_PARM:
       In_Default_1 &= ~DEFAULT_INVERT;
       switch (SI_UI_Msg_Ptr->p.Parm_Value)
       {
         case PARM_NOT_AVAIL:
           In_Default_1 |= DEFAULT_INVERT_NOT;
         case 0:
           break;
         case PARM_NO_MOD:
           In_Default_1 |= DEFAULT_INVERT_YES;
           break;
         case (PARM_NO_MOD | 1):
           In_Default_1 |= DEFAULT_INVERT_NO;
           break;
       }
       In_EE_Error |= EE_Write(&In_Default_1, &EE_Default_1, 1);
       IN_Status_Byte |= STATUS_CHANGED;
       break;
     case UI_SIZE_PARM:
       In_Default_1 &= ~DEFAULT_INTERPOLATE;
       switch (SI_UI_Msg_Ptr->p.Parm_Value)
       {
         case PARM_NOT_AVAIL:
           In_Default_1 |= DEFAULT_INTERPOLATE_NOT;
         case 0:
           break;
         case PARM_NO_MOD:
           In_Default_1 |= DEFAULT_INTERPOLATE_NO;
           break;
         case (PARM_NO_MOD | 1):
           In_Default_1 |= DEFAULT_INTERPOLATE_YES;
           break;
       }
       In_EE_Error |= EE_Write(&In_Default_1, &EE_Default_1, 1);
       IN_Status_Byte |= STATUS_CHANGED;
       break;
```

```
            SI_UI_Msg_Ptr->p.Parm_Value = PARM_NO_MOD;
            break;
      }
    break;
  case UI_RCOLOR_PARM:
    if (SP_Printer_Byte & THRESHOLD_AVAILABLE)
      {
        SI_UI_Msg_Ptr->p.Parm_Value = In_Default_Red;
        if (IN_Status_Byte & LOCK_THRESHOLD)
          SI_UI_Msg_Ptr->p.Parm_Value |= PARM_NO_MOD;
      }
    else
        SI_UI_Msg_Ptr->p.Parm_Value = PARM_NOT_AVAIL;
    break;
  case UI_GCOLOR_PARM:
    SI_UI_Msg_Ptr->p.Parm_Value = In_Default_Green;
    if (IN_Status_Byte & LOCK_THRESHOLD)
      SI_UI_Msg_Ptr->p.Parm_Value |= PARM_NO_MOD;
    break;
  case UI_BCOLOR_PARM:
    SI_UI_Msg_Ptr->p.Parm_Value = In_Default_Blue;
    if (IN_Status_Byte & LOCK_THRESHOLD)
      SI_UI_Msg_Ptr->p.Parm_Value |= PARM_NO_MOD;
    break;
  case UI_INSTALLMENU_PARM:
    SI_UI_Msg_Ptr->p.Parm_Value =(IN_Default_2 & INSTALL_ALLOWED) ? 0 : 1;
    break;
  case UI_RESERVE_PARM:
    SI_UI_Msg_Ptr->p.Parm_Value =(In_Default_1 & RESERVE_ALLOWED) ? 0 : 1;
    break;
  case UI_RESERVETIME_PARM:
    SI_UI_Msg_Ptr->p.Parm_Value = *((WORD *) IN_Reserve_Timeout) /
                                    ONE_MINUTE;
    break;
  case UI_MEDIATYPE_PARM:
    SI_UI_Msg_Ptr->p.Parm_Value = IN_Metric_Media;
    break;
  case UI_DATETIME_PARM:
    PI_RTC_Clock_Read(str_array);
    str_ptr = (BYTE *) SI_UI_Msg_Ptr->p.Parm_Value;
    for (i = 0; i < 12; i++, str_ptr++)
    {
      switch (i)
      {
        case 6:
          *str_ptr = '-';
          str_ptr++;
          break;
        case 8:
        case 10:
          *str_ptr = ':';
          str_ptr++;
        default:
          break;
      }
      *str_ptr = str_array[i] + '0';
    }
    break;
  case UI_EDITCOUNT_PARM:
    SI_UI_Msg_Ptr->p.Parm_Value = (WORD) &SP_Copy_Count;
    break;
  default:
    Error_Handler((BYTE) INPUT_TASK_NAME, (BYTE) SOFTWR_ERROR);
    break;
```

```
      if (is_metric_media)
        SP_Copier_Out |= METRIC_MEDIA;
      else
        SP_Copier_Out &= ~METRIC_MEDIA;
      *mem(COPIER_OUT) = SP_Copier_Out;
      break;
    case UI_DATETIME_PARM:
      str_ptr = (BYTE *) SI_UI_Msg_Ptr->p.Parm_Value;
      for (i = 0; i < 7; i++, str_ptr++)
        if (i == 3)
          str_array[i] = 1;                /* dummy value for day of week */
        else
        {
          if (i > 4)
            str_ptr++;
          str_array[i] = (*str_ptr - '0') << 4;
          str_ptr++;
          str_array[i] += *str_ptr - '0';
        }
      PI_RTC_Clock_Write(str_array);
      break;
    case UI_EDITCOUNT_PARM:
      SP_Copy_Count = *((LWORD *) SI_UI_Msg_Ptr->p.Parm_Value);
      PI_RTC_Write((BYTE *) &SP_Copy_Count);
      In_EE_Error |= EE_Write((BYTE *) &SP_Copy_Count,
                              (BYTE *) &EE_Copy_Count, 4);
      break;
    default:
      Error_Handler((BYTE) INPUT_TASK_NAME, (BYTE) SOFTWR_ERROR);
      break;
    }
    break;
  default:
    Error_Handler((BYTE) INPUT_TASK_NAME, (BYTE) SOFTWR_ERROR);
    break;
  }
  Put_Msg((BYTE *) SI_UI_Msg_Ptr, UI_Task_Ptr);
  SI_UI_Msg_Ptr = NULL;
  return;
}
```

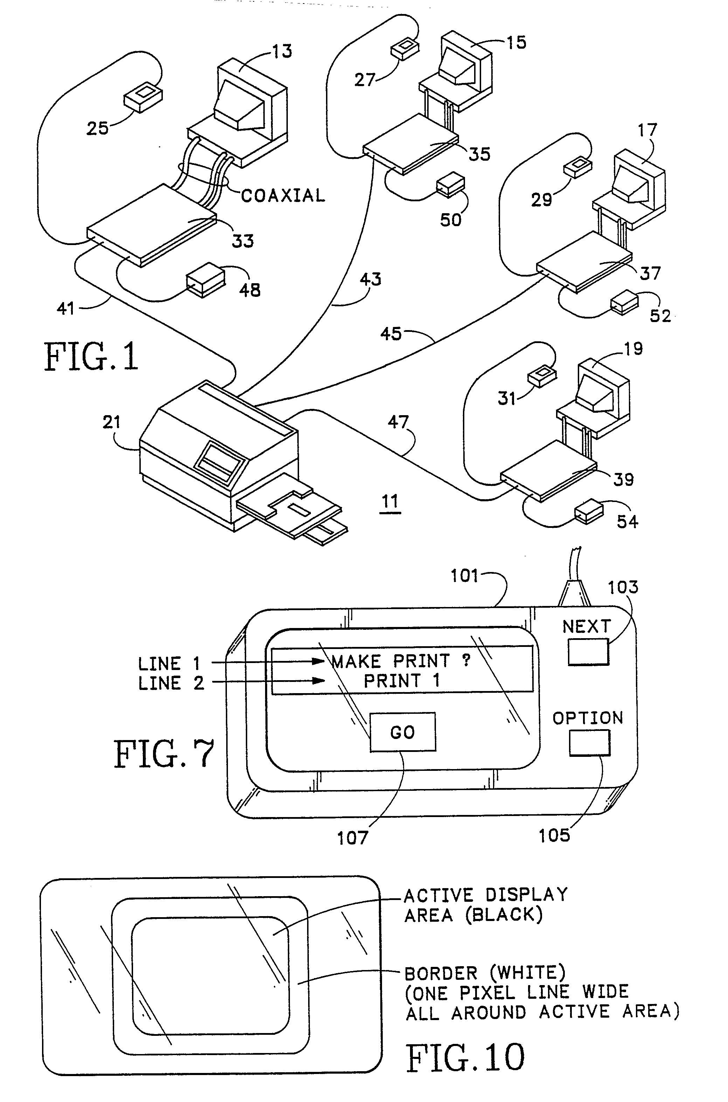

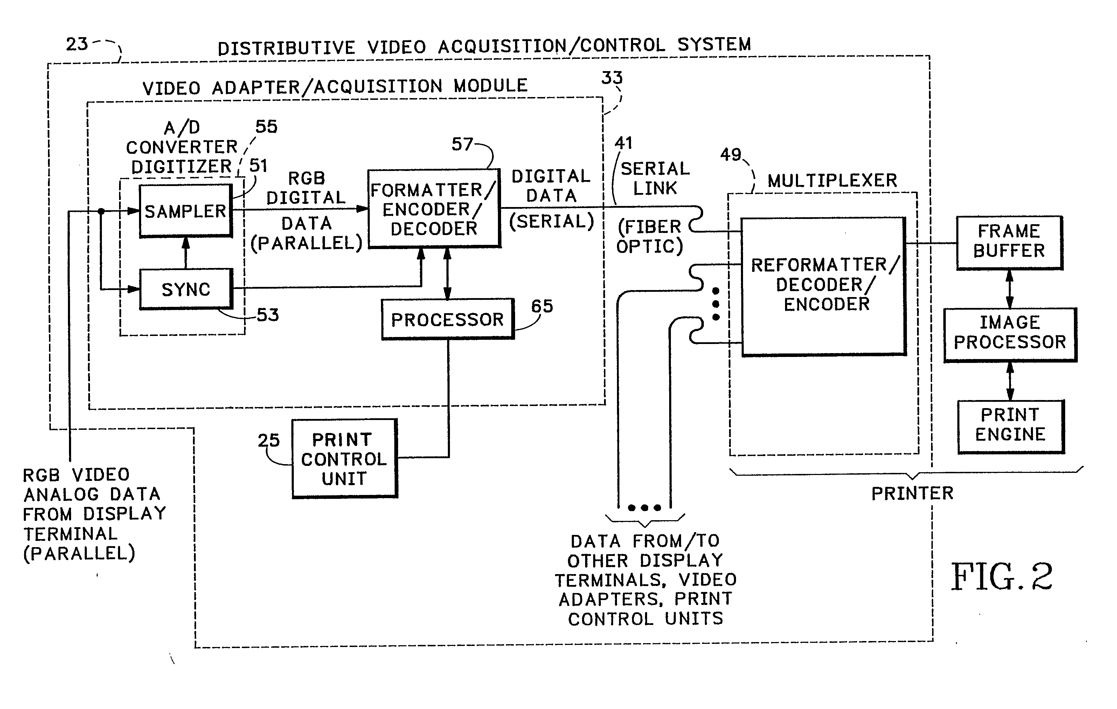

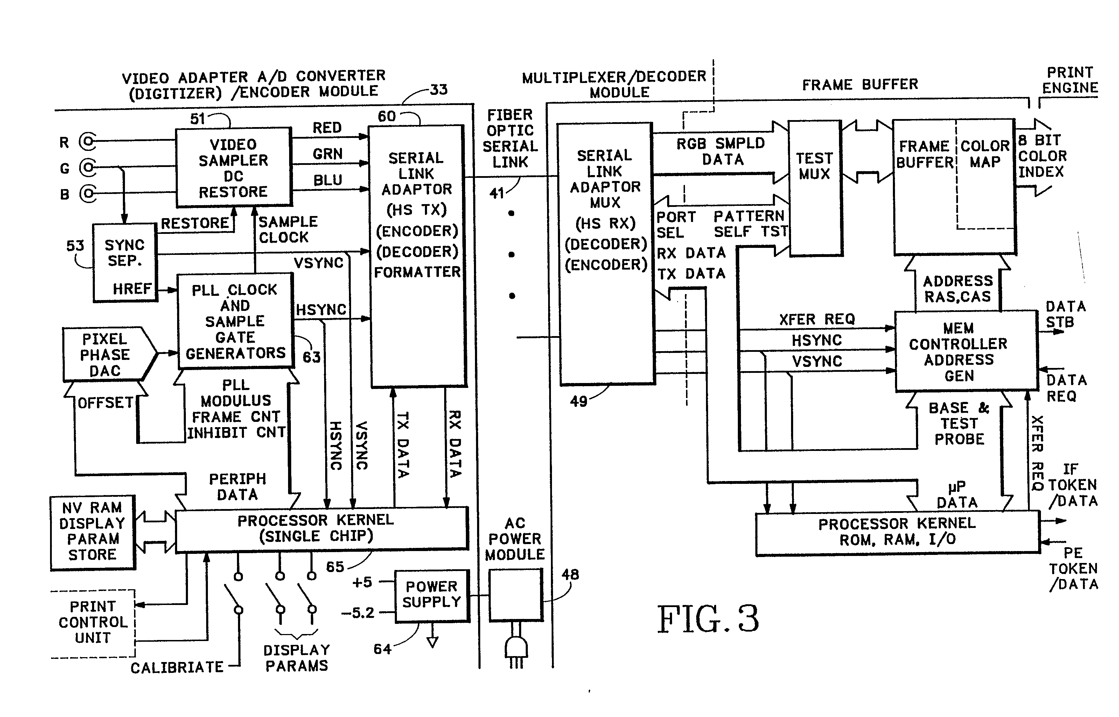

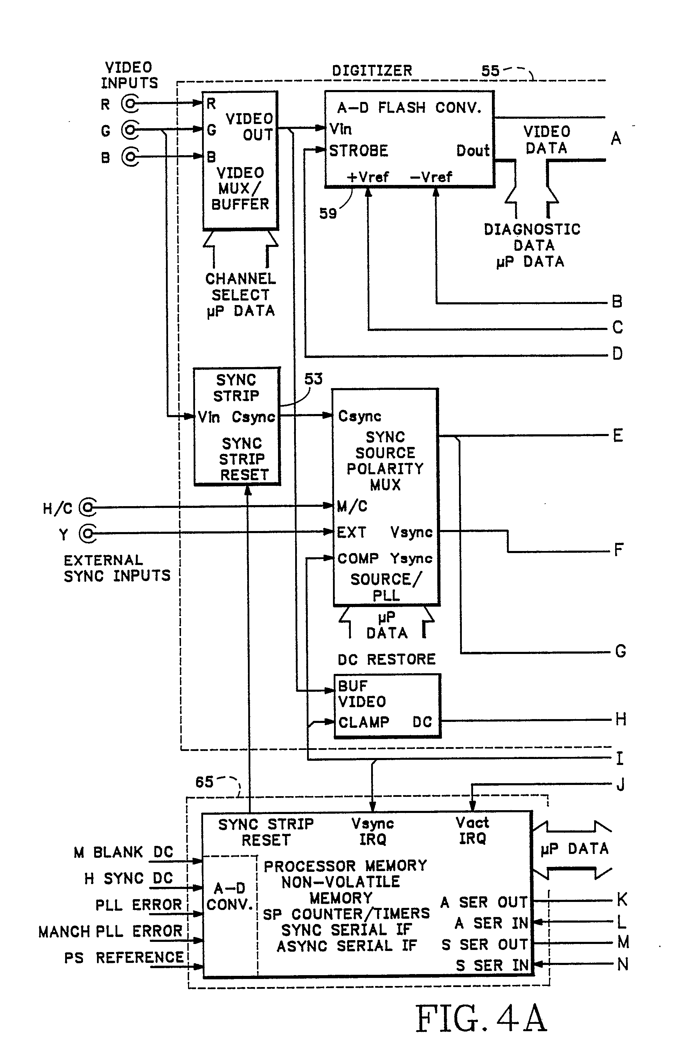

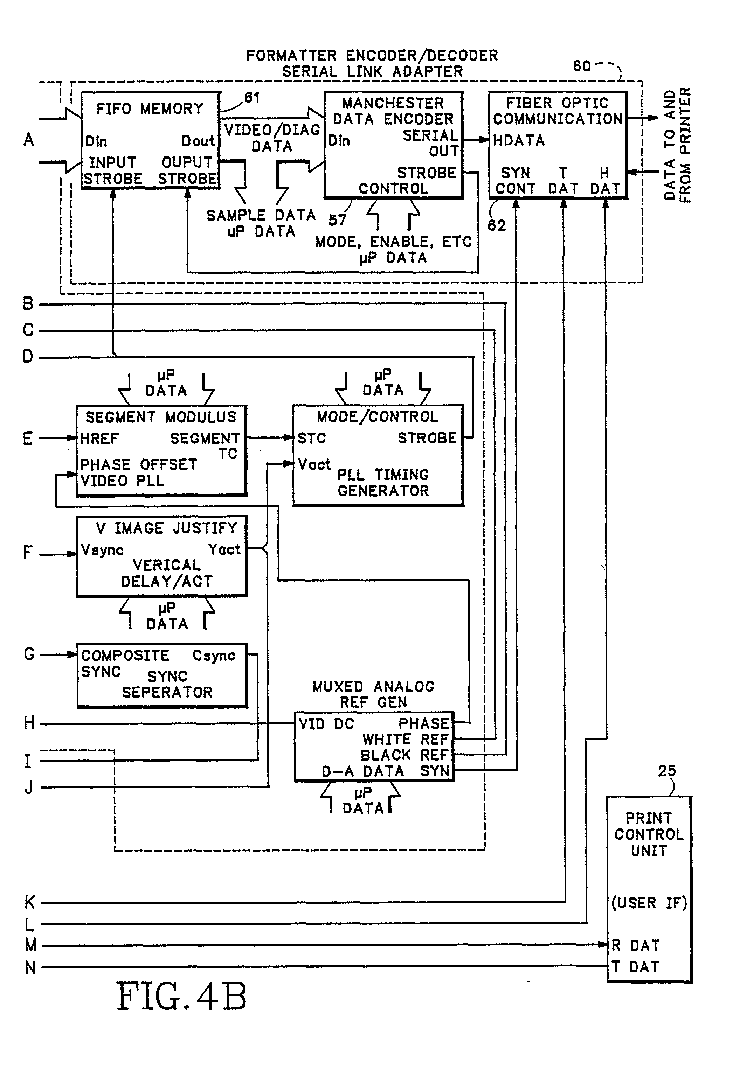

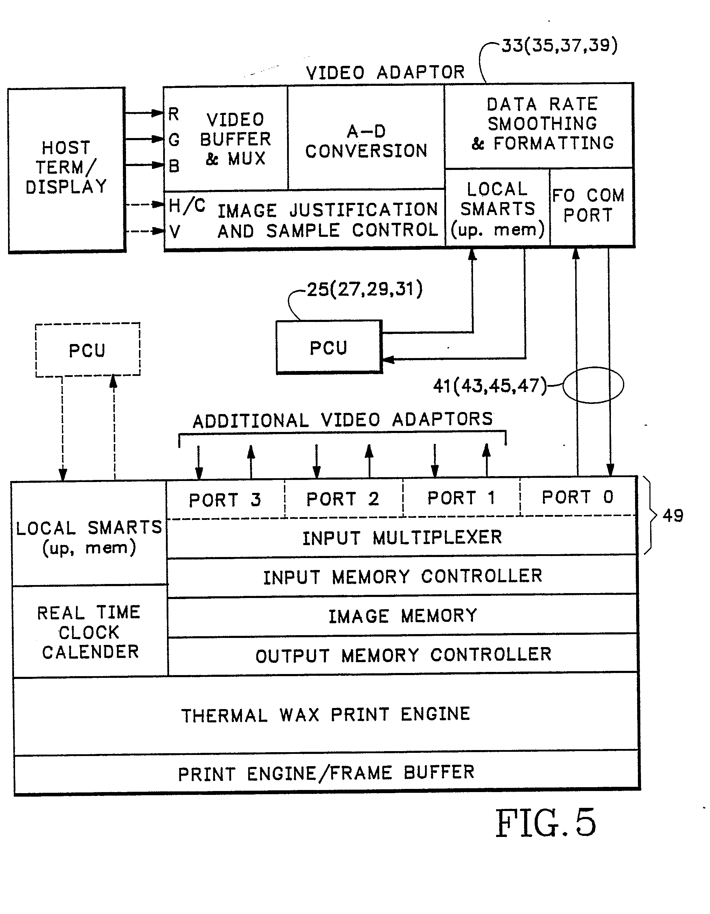

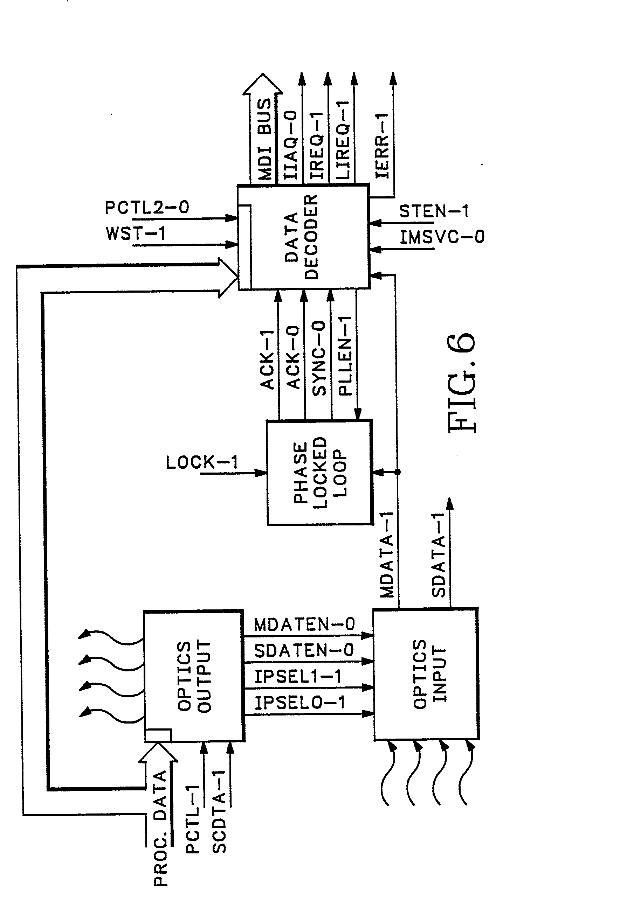

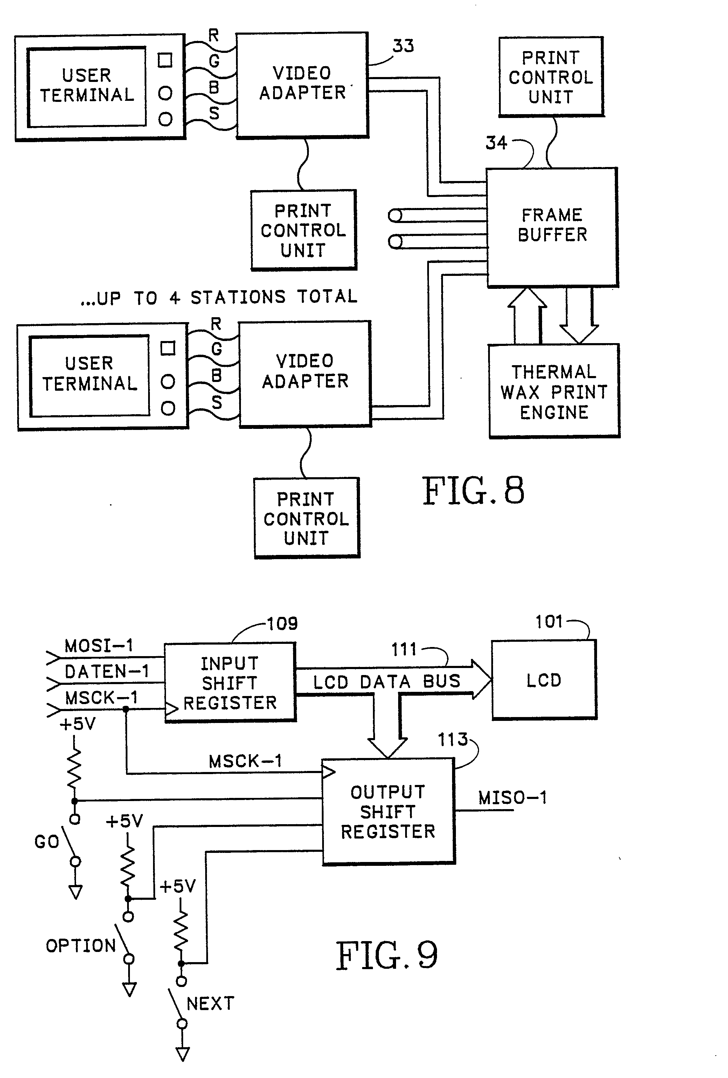

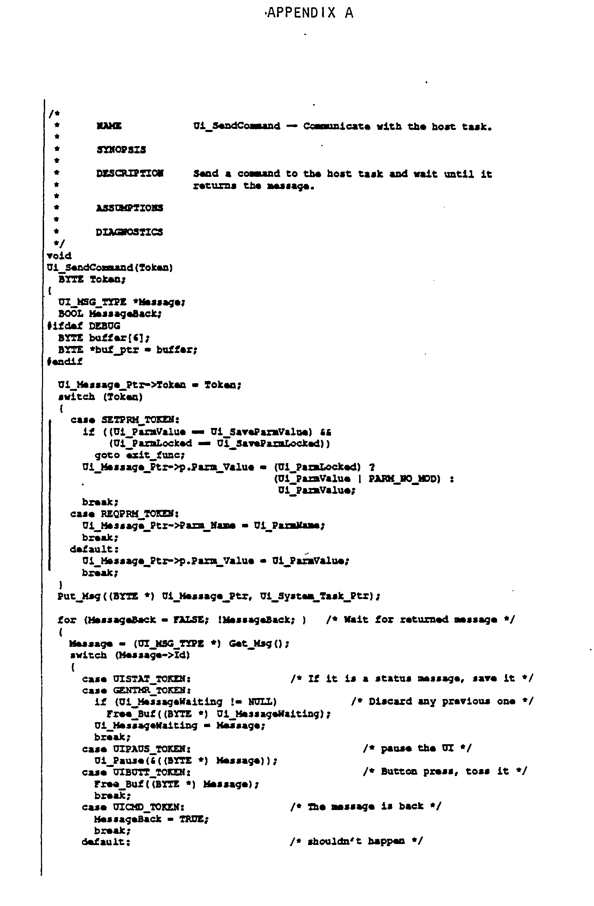

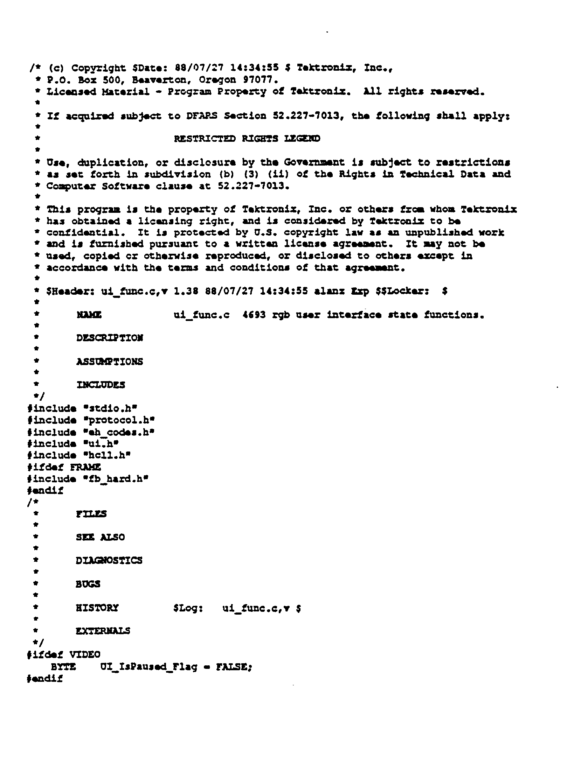

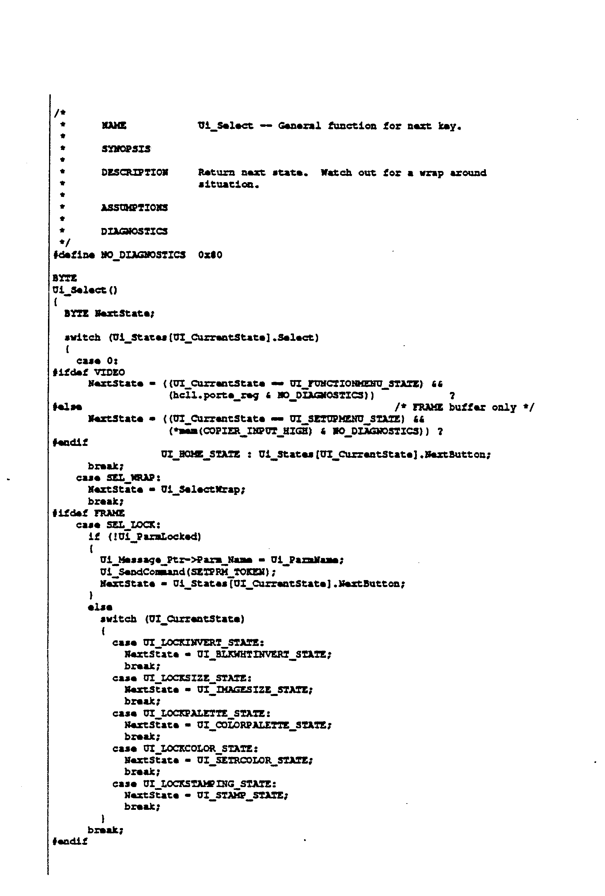

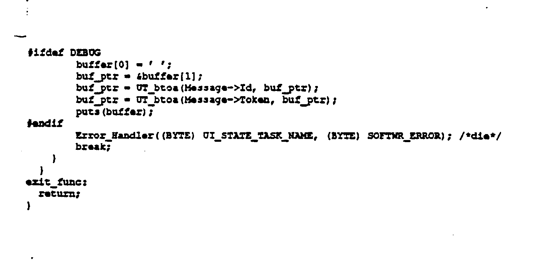

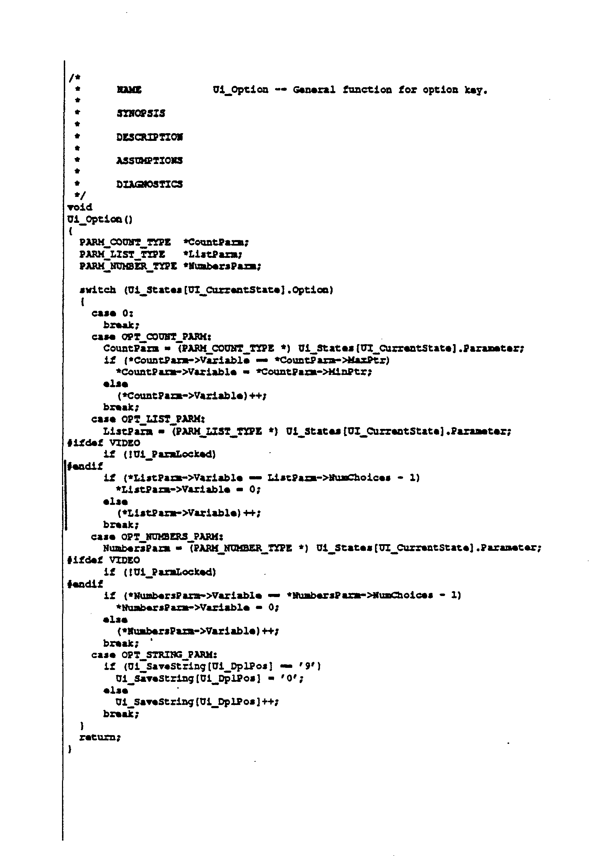

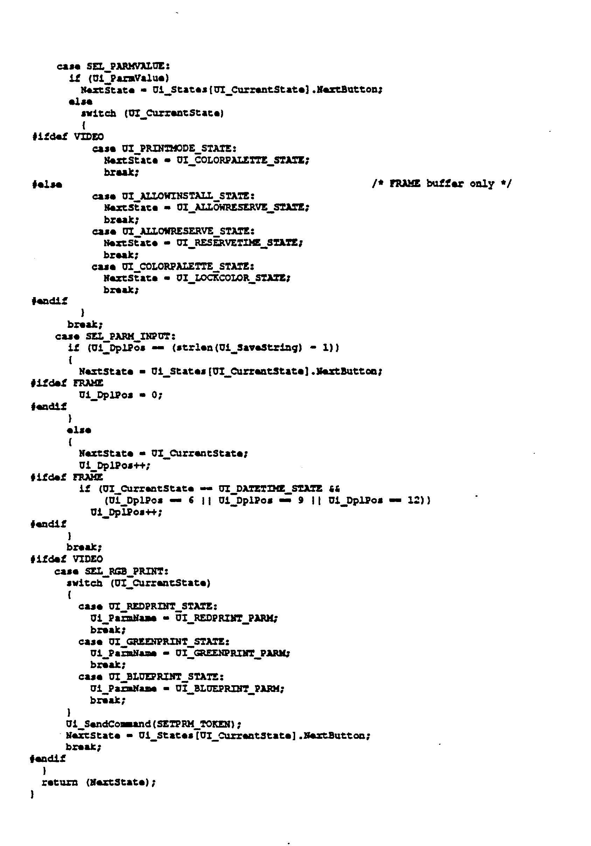

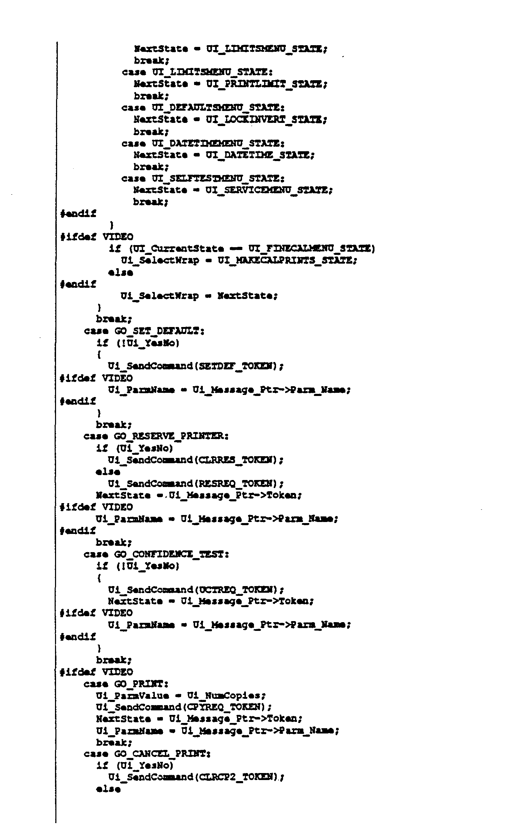

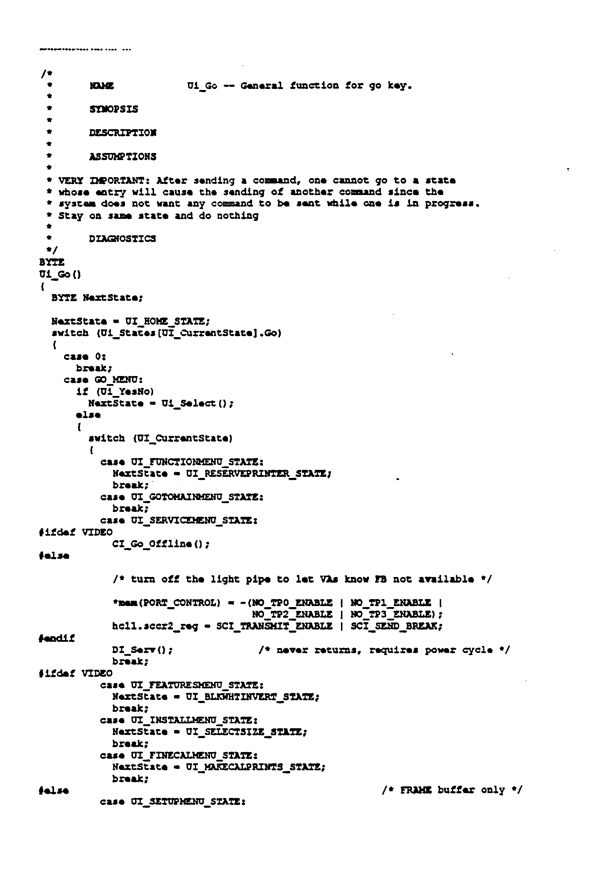

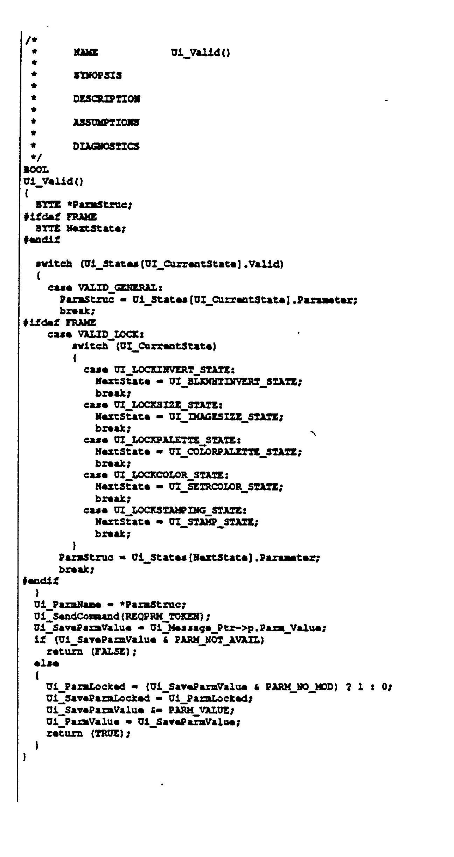

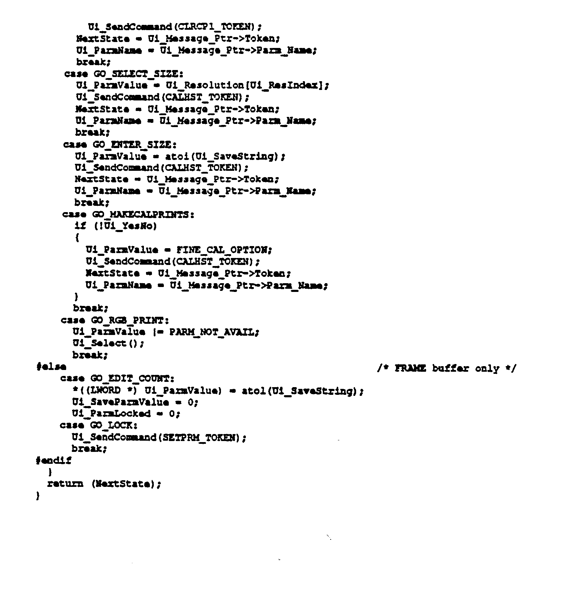

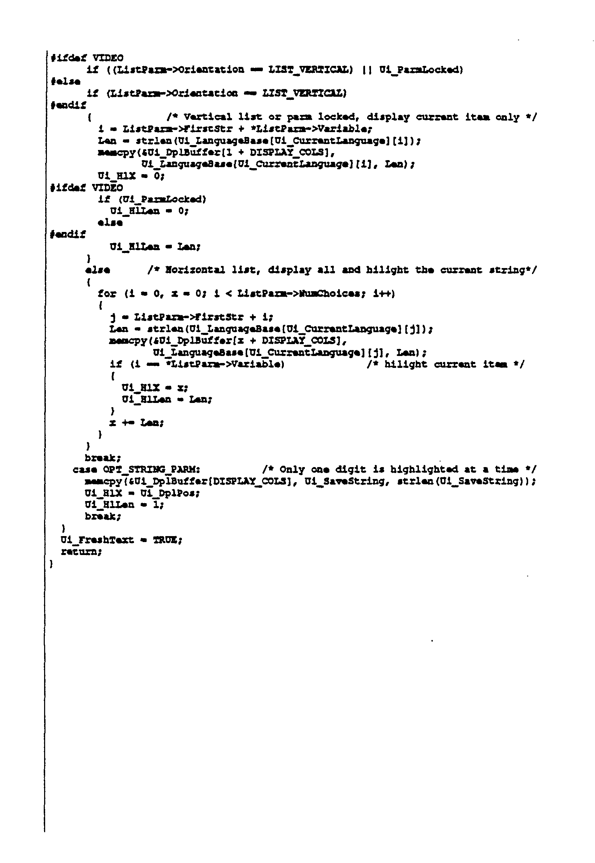

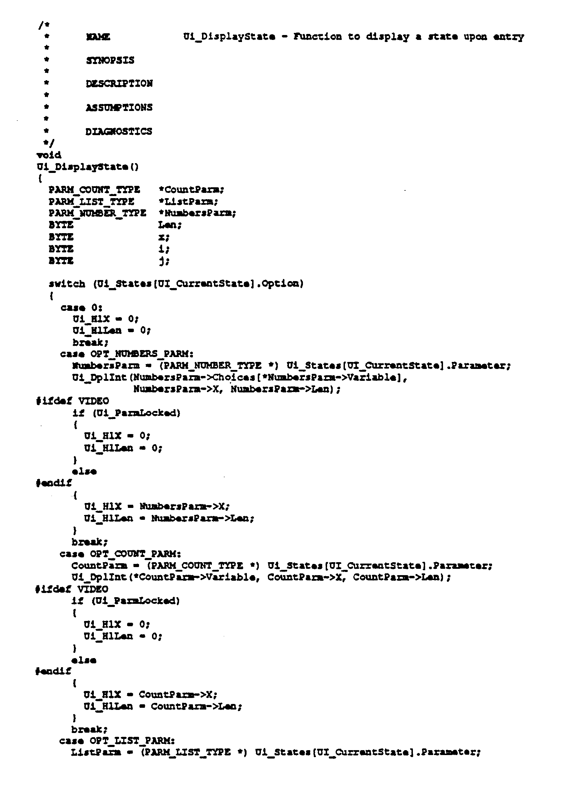

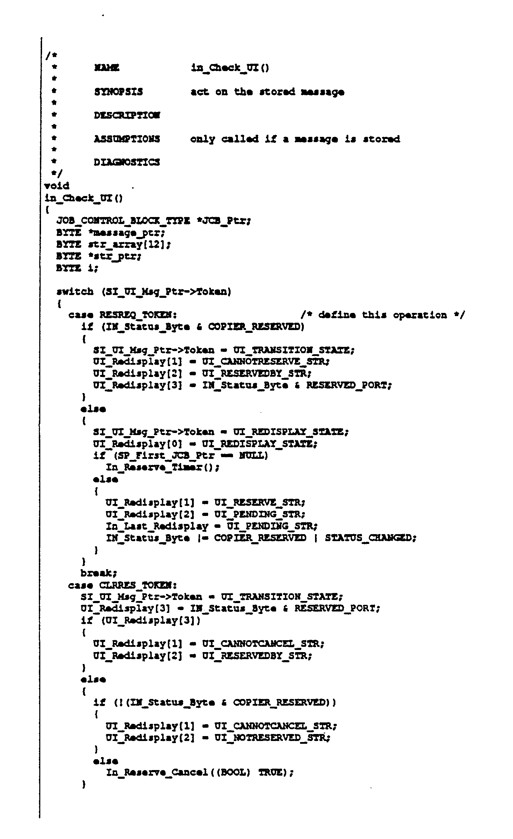

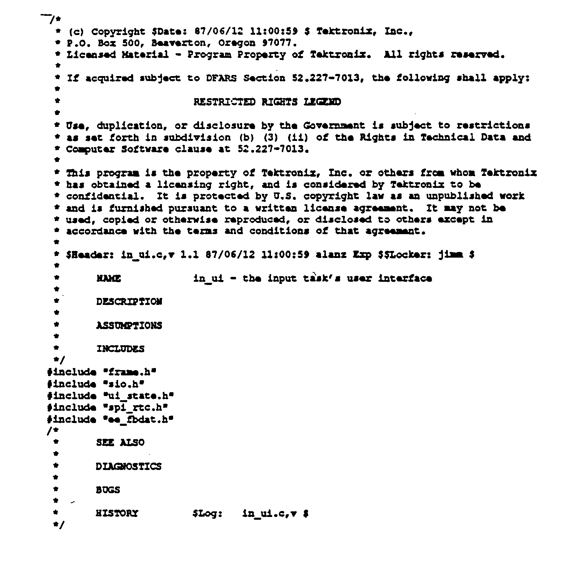

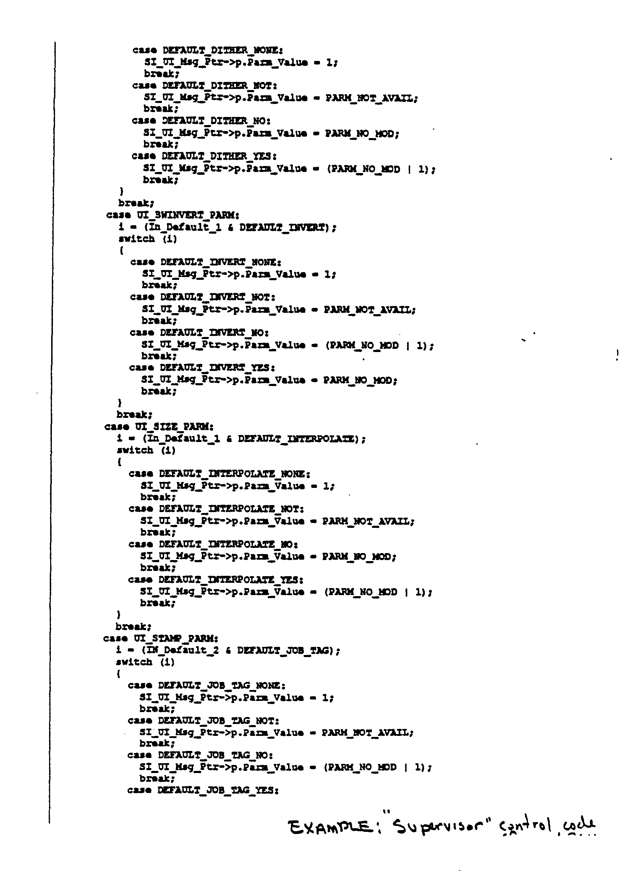

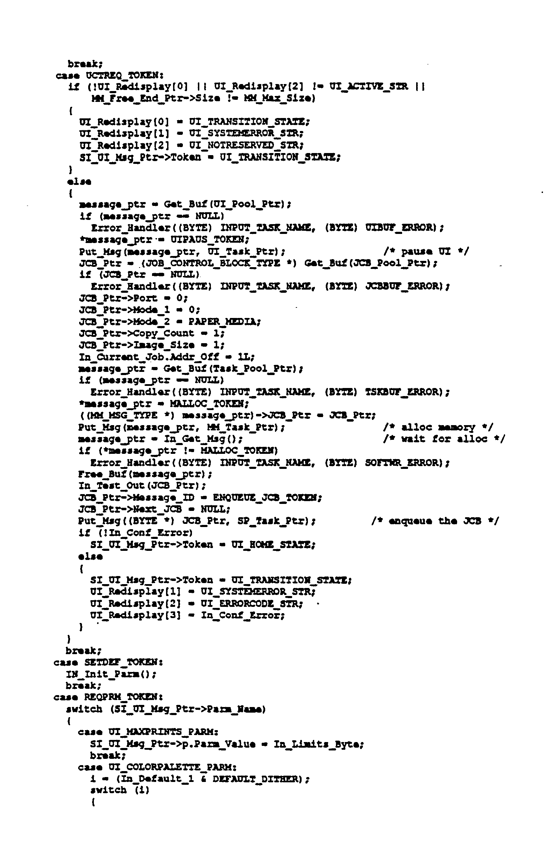

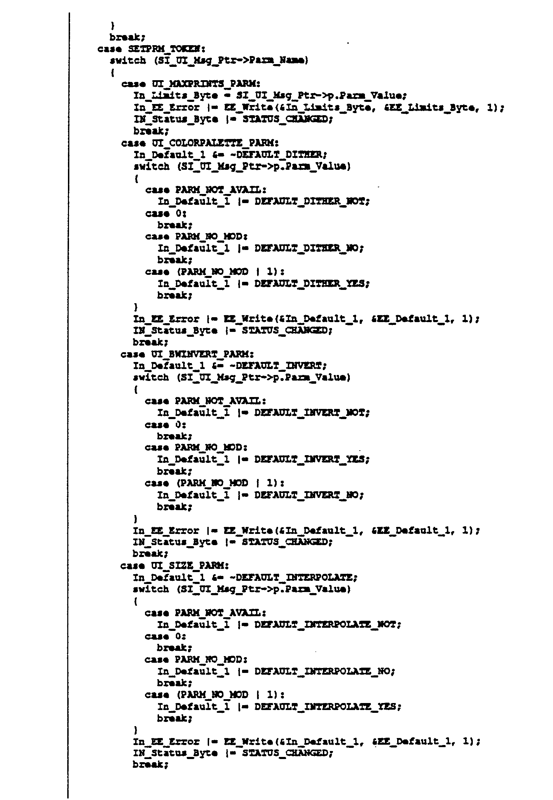

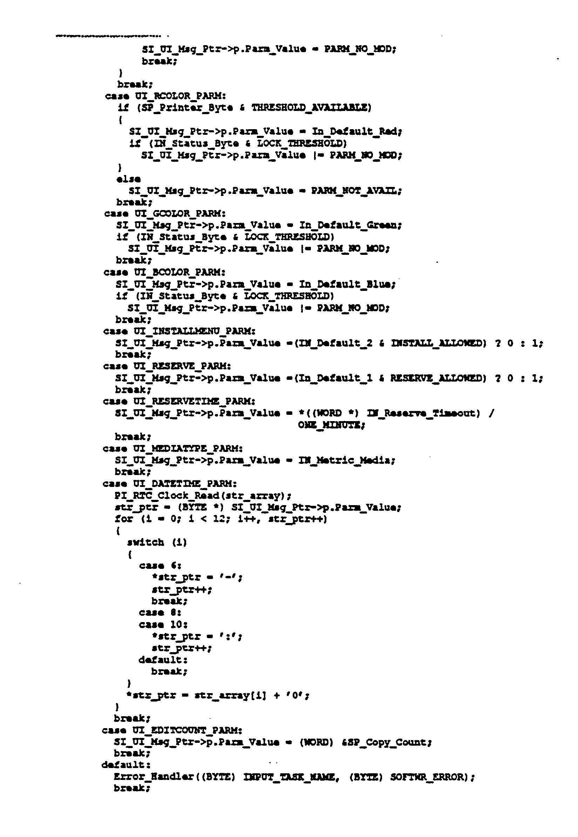

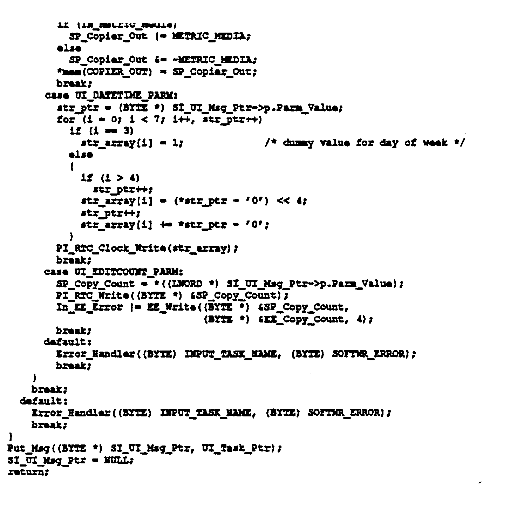

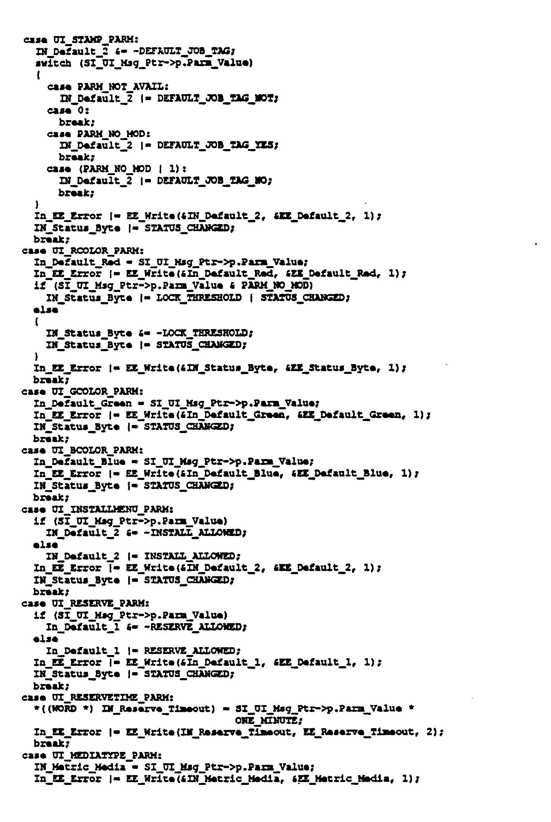

```
case UI_STAMP_PARM:
  IN_Default_2 &= ~DEFAULT_JOB_TAG;
  switch (SI_UI_Msg_Ptr->p.Parm_Value)
  {
    case PARM_NOT_AVAIL:
      IN_Default_2 |= DEFAULT_JOB_TAG_NOT;
    case 0:
      break;
    case PARM_NO_MOD:
      IN_Default_2 |= DEFAULT_JOB_TAG_YES;
      break;
    case (PARM_NO_MOD | 1):
      IN_Default_2 |= DEFAULT_JOB_TAG_NO;
      break;
  }
  In_EE_Error |= EE_Write(&IN_Default_2, &EE_Default_2, 1);
  IN_Status_Byte |= STATUS_CHANGED;
  break;
case UI_RCOLOR_PARM:
  In_Default_Red = SI_UI_Msg_Ptr->p.Parm_Value;
  In_EE_Error |= EE_Write(&In_Default_Red, &EE_Default_Red, 1);
  if (SI_UI_Msg_Ptr->p.Parm_Value & PARM_NO_MOD)
    IN_Status_Byte |= LOCK_THRESHOLD | STATUS_CHANGED;
  else
  {
    IN_Status_Byte &= ~LOCK_THRESHOLD;
    IN_Status_Byte |= STATUS_CHANGED;
  }
  In_EE_Error |= EE_Write(&IN_Status_Byte, &EE_Status_Byte, 1);
  break;
case UI_GCOLOR_PARM:
  In_Default_Green = SI_UI_Msg_Ptr->p.Parm_Value;
  In_EE_Error |= EE_Write(&In_Default_Green, &EE_Default_Green, 1);
  IN_Status_Byte |= STATUS_CHANGED;
  break;
case UI_BCOLOR_PARM:
  In_Default_Blue = SI_UI_Msg_Ptr->p.Parm_Value;
  In_EE_Error |= EE_Write(&In_Default_Blue, &EE_Default_Blue, 1);
  IN_Status_Byte |= STATUS_CHANGED;
  break;
case UI_INSTALLMENU_PARM:
  if (SI_UI_Msg_Ptr->p.Parm_Value)
    IN_Default_2 &= ~INSTALL_ALLOWED;
  else
    IN_Default_2 |= INSTALL_ALLOWED;
  In_EE_Error |= EE_Write(&IN_Default_2, &EE_Default_2, 1);
  IN_Status_Byte |= STATUS_CHANGED;
  break;
case UI_RESERVE_PARM:
  if (SI_UI_Msg_Ptr->p.Parm_Value)
    In_Default_1 &= ~RESERVE_ALLOWED;
  else
    In_Default_1 |= RESERVE_ALLOWED;
  In_EE_Error |= EE_Write(&In_Default_1, &EE_Default_1, 1);
  IN_Status_Byte |= STATUS_CHANGED;
  break;
case UI_RESERVETIME_PARM:
  *((WORD *) IN_Reserve_Timeout) = SI_UI_Msg_Ptr->p.Parm_Value *
                                   ONE_MINUTE;
  In_EE_Error |= EE_Write(IN_Reserve_Timeout, EE_Reserve_Timeout, 2);
  break;
case UI_MEDIATYPE_PARM:
  IN_Metric_Media = SI_UI_Msg_Ptr->p.Parm_Value;
  In_EE_Error |= EE_Write(&IN_Metric_Media, &EE_Metric_Media, 1);
```